# EUROPEAN PATENT APPLICATION

(11) **EP 1 271 326 A2**
(43) Date of publication of application: **02.01.2003**
(21) Application number: 02013943.2
(22) Date of filing: 24.06.2002
(51) Int. Cl.: G06F 12/14

(54) **Write protect method**

(30) Priority: 29.06.2001 JP 2001199080
(71) Applicant: NEC CORPORATION, Tokyo (JP)
(72) Inventor: Ueno, Tomoo, Nakahara-ku, Kawasaki-shi, Kanagawa (JP)
(74) Representative: Glawe, Delfs, Moll & Partner

(57) **Abstract**

A write protect system (**100**) including a write protect circuit (**10**) that may provide write protection for a protected register (**1**) has been disclosed. Write protect circuit (**10**) may detect whether or not a write sequence (**600**) has been followed. Write sequence (**600**) may include first (**901**), second (**902**), and third (**903**) commands. First command (**901**) may include a write of data to a protected register (**1**). Second command (**902**) may include a write of inverted data to a protected register (**1**). A third command (**903**) may include a write of data to a protected register (**1**). Write protect circuit (**10**) may only allow a write to a protected register (**1**) if write sequence (**600**) has been followed. In this way, a protected register (**1**) may be protected against erroneous writes and a system (**100**) including a CPU (**6**) may have improved reliability.

## Description

### TECHNICAL FIELD

The present invention relates generally to a write protect method and more particularly to a write protect method that may prevent an erroneous write to a microcomputer control register or the like.

### BACKGROUND OF THE INVENTION

Because of the broad use of microcomputers in systems, it can be desirable to prevent an erroneous write to control registers. This is particularly important if the control register may have a significant influence on the operation of the system. For example, if a boot sector in a flash memory is inappropriately altered, a system may not properly boot even if reset. Thus, it can be extremely important to prevent an erroneous write to occur in a control register, or the like, which is involved in a self-write function of a flash memory.

The above-mentioned need is addressed by Japanese Patent Application Laid Open No. Hei 08-235073 (JPA '073). Referring to FIG. 28, a block diagram of a conventional write protect circuit as disclosed in JPA '073 is set forth. JPA '073 provides a protection controlling register in a write protect circuit **13** that retains information for determining whether to prohibit writing of data to a control register **1** to be protected. When a write operation occurs, a control register (**1** to **n**) to which data is to be written into is specified. If the control register (**1** to **n**) to which data is to be written into is control register **1** (a protected control register), a write signal **wr_preg** is controlled in accordance with information in protection control register in write protect circuit **13**.

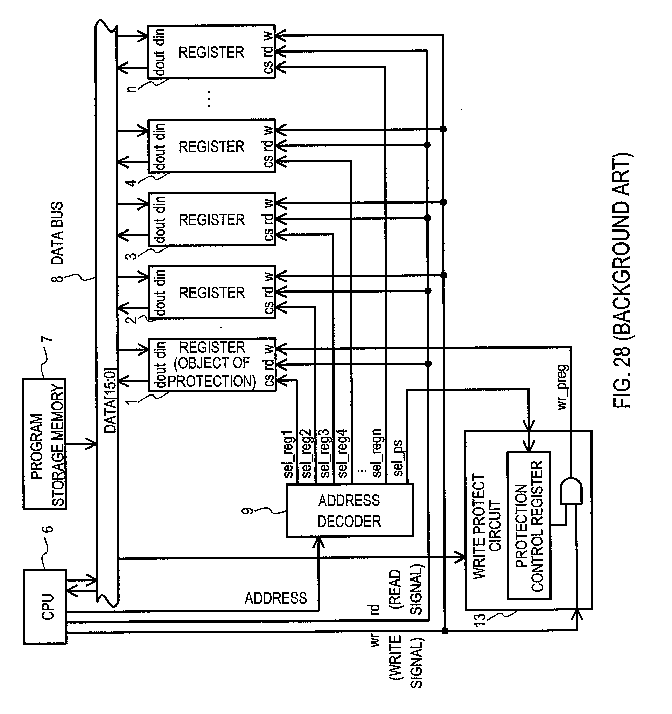

However, conventional write protect circuit of FIG. 28 does not include a function to confirm whether or not the write data has an error. As a result, a problem can occur if data on a data bus **8** has been unexpectedly corrupted. In this case, the write cannot be invalidated and corrupted data can be written into the protected control register **1**.

In view of the above discussion, it would be desirable to provide a write protection circuit that may prevent erroneous data from being written into a predetermined register, or the like and method therefore.

### SUMMARY OF THE INVENTION

According to the present embodiments, a write protect system may include a write protect circuit that may provide write protection for a protected register. A write protect circuit may detect whether or not a write sequence has been followed. A write sequence may include a first command, a second command, and a third command. A first command may include a write of data to a protected register. A second command may include a write of inverted data to a protected register. A third command may include a write of data to a protected register. Write protect circuit may only allow a write to a protected register if a write sequence has been followed. In this way, a protected register may be protected against erroneous writes and a system including a CPU (central processing unit) may have improved reliability.

According to one aspect of the embodiments, a write protect method may prevent an erroneous write to a predetermined register. The write protect method may include the steps of determining whether or not a write operation for writing data to the predetermined register was performed according to a predetermined write sequence. The predetermined write sequence may include at least a first and second write command. The method may also control writing of the data to the predetermined register so that the writing of data is only performed when it is determined in the determining step that the write operation for writing data to the predetermined register was performed according to the predetermined write sequence.

According to another aspect of the embodiments, the step of determining may include verifying the data by performing a data comparison.

According to another aspect of the embodiments, the first write command may include providing the data on a data bus and providing a first address corresponding to the predetermined register. The second write command may include providing inverse data on the data bus and providing the first address corresponding to the predetermined register.

According to another aspect of the embodiments, a predetermined write sequence may include a third write command. A third write command may include providing the data on the data bus and providing the first address corresponding to the predetermined register. A predetermined write sequence may be executed in the order of first write command, second write command, and third write command.

According to another aspect of the embodiments, a predetermined write sequence may include a third write command. A third write command may include providing a predetermined value on the data bus and providing a second address. A predetermined write sequence may be executed in the order of third write command, first write command, and second write command.

According to another aspect of the embodiments, the write protect method may further include the step of providing an error signal to a processing unit when it is determined that the write operation for writing data to the predetermined register was not performed according to the predetermined write sequence.

According to another aspect of the embodiments, a step of determining whether or not a write operation has been performed may be executed by a computing device in accordance with a write protect program.

According to another aspect of the embodiments, a write protect system for preventing an erroneous write to a first register may include a write protect circuit. A write protect circuit may determine whether or not a write operation for writing data to the first register was performed according to a predetermined write sequence. The predetermined write sequence may include a first command and a second command. The write protect circuit may control the writing of the data to the first register so that the writing of data may be only performed when it is determined that the write operation for writing data to the first register was performed according to the predetermined write sequence.

According to another aspect of the embodiments, the write protect circuit may be coupled to receive the data from a data bus coupled to a processor.

According to another aspect of the embodiments, the write protect circuit is coupled to receive the data in the first command and coupled to receive different data in the second command.

According to another aspect of the embodiments, the predetermined write sequence may include a third command. The write protect circuit may be coupled to receive the data in the third command. The predetermined write sequence may be executed in the order of first command, second command, and third command.

According to another aspect of the embodiments, the write protect circuit may be coupled to receive at least one register select signal. The at least one register select signal may have a first register select value in the first and second commands. The predetermined write sequence may include a third command. The write protect circuit may be coupled to receive a predetermined data value in the third command and at the least one register select signal may have a command register select value.

According to another aspect of the embodiments, the write protect circuit may reset to detect the first command in the predetermined sequence when it is determined that the predetermined sequence has not been followed.

According to another aspect of the embodiments, the write protect circuit may receive the data in the first command and may receive inverse data in the second command.

According to another aspect of the embodiments, a write protect system may prevent an erroneous write to a first storage circuit. A write protect system may include a write protect circuit. A write protect circuit may determine whether or not a write operation for writing data to the first storage circuit was performed according to a predetermined write sequence. The predetermined write sequence may include at least a first command and a second command. The write protect circuit may control the writing of the data to the first storage circuit so that the writing of data may only be performed when it is determined that the write operation for writing data to the first storage circuit was performed according to the predetermined write sequence.

According to another aspect of the embodiments, the write protect circuit may include a data latch circuit. The data latch circuit may receive the data and provide latched data in response to the first command.

According to another aspect of the embodiments, the write protect circuit may include a comparator circuit. The comparator circuit may receive the latched data and second command data and provide a comparison result.

According to another aspect of the embodiments, a comparison result may include a match signal indicating a comparison between the latched data and the second command data.

According to another aspect of the embodiments, the write protect circuit may include a state circuit. The state circuit may provide a write sequence state. The write sequence state may indicate a progression of the write sequence.

According to another aspect of the embodiments, the write protect circuit may include a sequence error detector. The sequence error detector may receive the write sequence state and provide a sequence error signal.

According to another aspect of the embodiments, the write protect circuit may include a first storage circuit write signal generator. The first storage circuit write signal generator may receive the write sequence state and provide a first storage circuit write signal.

### BRIEF DESCRIPTION OF THE DRAWINGS

FIG. 1 is a block schematic diagram of a system including a write protect circuit according to an embodiment.
FIG. 2 is a circuit schematic diagram of a write protect circuit according to an embodiment.
FIG. 3 is a state diagram illustrating a status progression of a count signal according to an embodiment.
FIG. 4 is a circuit schematic diagram of a step counter according to an embodiment.
FIG. 5 is a circuit schematic diagram of a sequence error detector according to an embodiment.
FIG. 6 is a flow chart illustrating a write sequence according to an embodiment.
FIG. 7 is a timing diagram of a write to a protected register using a write sequence according to an embodiment.
FIG. 8 is a timing diagram illustrating a case where an erroneous write operation to a register other than a protected register occurs after step 1 according to an embodiment.
FIG. 9 is a timing diagram illustrating a case where an erroneous write operation occurs after step 1 with a value other than inverted data according to an embodiment.
FIG. 10 is a timing diagram illustrating a case where an erroneous write operation to a register other than protected register occurs after step 2 according to an embodiment.
FIG. 11 is a timing diagram illustrating a case where an erroneous write operation occurs after step 2 with a value other than data according to an embodiment.
FIG. 12 is a block schematic diagram of a system including a write protect circuit according to an embodiment.
FIG. 13 is a circuit schematic diagram of a write protect circuit according to an embodiment.
FIG. 14 is a circuit schematic diagram of an object register detector according to an embodiment.
FIG. 15 is a state diagram illustrating a status progression of a count signal according to an embodiment.
FIG. 16 is a circuit schematic diagram of a step counter according to an embodiment.
FIG. 17 is a timing diagram of a write to a protected register using a write sequence according to an embodiment.
FIG. 18 is a timing diagram illustrating a case where an erroneous write operation to a register other than the object protected register occurs after step 2 according to an embodiment.
FIG. 19 is a block schematic diagram of a system including a write protect circuit according to an embodiment.
FIG. 20 is a circuit schematic diagram of write protect circuit according to an embodiment.
FIG. 21 is a state diagram illustrating a status progression of a count signal according to an embodiment.
FIG. 22 is a circuit schematic diagram of a step counter according to an embodiment.
FIG. 23 is a circuit schematic diagram of a sequence error detector according to an embodiment.
FIG. 24 is a flow chart illustrating a write sequence according to an embodiment.
FIG. 25 is a timing diagram of a write to a protected register using a write sequence according to an embodiment.
FIG. 26 is a timing diagram illustrating a case where an erroneous write operation to protected register occurs without a preceding write operation writing 55AAh to a command register according to an embodiment.
FIG. 27 is a timing diagram illustrating a case where an erroneous write operation may occur after step 3 with a value other than data according to an embodiment.
FIG. 28 is a block diagram of a conventional write protect circuit.

### DETAILED DESCRIPTION OF THE EMBODIMENTS

The present invention may prevent a write error to a control register. For example, a write protection circuit may be provided for a control register that may significantly influence operation of a system. A write protection circuit may only permit a write operation when a specific sequence is performed. If a specific sequence is not performed, a write operation may be invalidated. In such a sequence, the validity (correctness) of write data may be confirmed. The validity may be confirmed before a write control signal is applied to the control register.

Various embodiments of the present invention will now be described in detail with reference to a number of drawings.

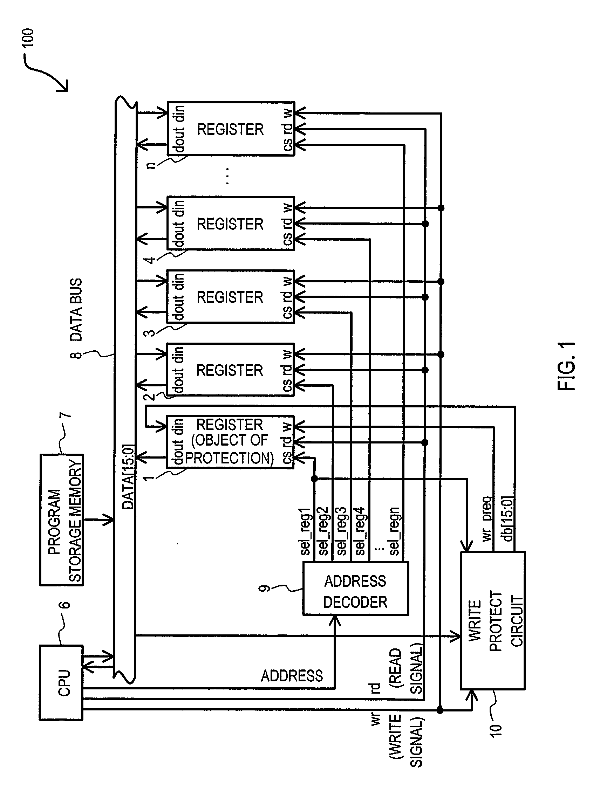

Referring now to FIG. 1, a block schematic diagram of a system including a write protect circuit is set forth according to an embodiment and given the general reference character **100**.

System **100** may include a register **1**. Register **1** may have a significant influence on the operation of system **100**. Thus, a write protect circuit **10** may be included. Write protect circuit **10** may only permit data to be written into register **1** when a write operation is performed according to a specific sequence.

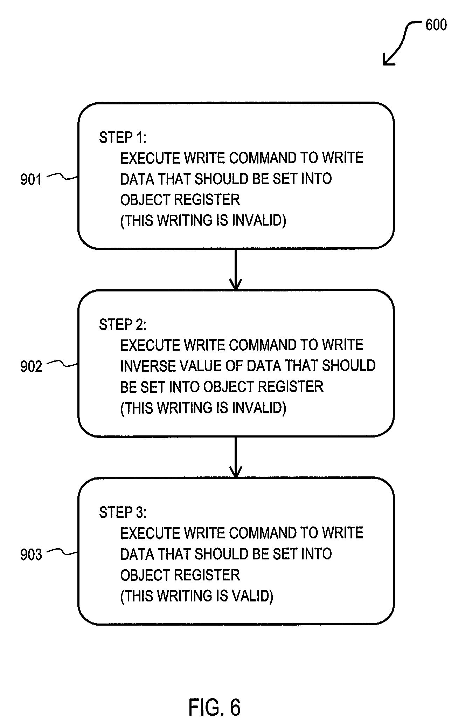

Referring to FIG. 6, a flow chart illustrating a write sequence according to an embodiment is set forth and given the general reference character **600**.

Write sequence **600** may include 3 steps illustrated as step 1 **901** through step 3 **903**. Write protect circuit **10** (FIG. 1) may only permit data to be written into register **1** when a write operation specifically follows write sequence **600**. In a case where write sequence **600** is not followed, the write operation may become invalid. For example, if another write operation is performed between step 1 **901** and step 2 **902** or between step 2 **902** and step 3 **903**, the writing may become invalid.

In this way, for example in a system **100** (such as a computing device, for example) as illustrated in FIG. 1, even when an erroneous write to register **1** occurs due to a system abnormality, for example, runaway by a CPU (central processing unit) **6** causing erroneous data on a data bus **8**, the write operation may be invalidated unless performed in accordance with write sequence **600**. Thus, an erroneous write may be prevented.

A detailed explanation will now be made of a system **100** which may include a write protection circuit **10.** System **100** may include registers (**1** to **n**), a CPU **6**, a program storage memory **7**, a data bus **8**, an address decoder **9**, and a write protect circuit **10**. CPU **6** may provide control for system **100**. Program storage memory **7** may store a program, for example.

CPU 6 may read (via data bus **8**) and execute a predetermined control program stored in program storage memory **7**. CPU **6** may provide a write signal **wr** to write protect circuit **10** and registers (**2** to **n**, where n may be a natural number corresponding to the total number of registers). Write signal **wr** may be a control signal instructing registers (**2** to **n**) to receive data from data bus **8**. CPU **6** may provide a read signal **rd** to registers (**1** to **n**). Read signal rd may be a control signal instructing registers (**1** to **n**) to provide data to data bus **8**. CPU **6** may provide and/or receive data to/from data bus **8**. Program storage memory **7** may store a predetermined control program and may supply various data to data bus **8**. A predetermined control program stored in program storage memory **7** may provide control instructions, for example, to CPU **6**. Address decoder **9** may receive an address **ADDRESS** from CPU **6** and may provide selection signals (**sel_reg1** to **sel_regn**) to respective registers (**1** to **n**). Selection signals (**sel_reg1** to **sel_regn**) may be selectively activated in accordance with address **ADDRESS**. Selection signal **sel_reg1** may be provided to write protect circuit **10**. Write protect circuit may provide a write signal **wr_preg** and data **db[15:0]** to register **1**. Data **DATA[15:0]** may be provided to registers (**2** to **n**) through data bus **8**. Registers (**1** to **n**) may provide data **DATA[15:0]** to data bus **8** in a read from register operation.

In the present embodiment, data bus **8** may have a 16-bit width and address **ADDRESS** may be applied to a separate bus, however, the present invention may be applicable to other bus sizes and constructions. Register **1** may be a register that can be protected from undesired/erroneous writes by write protect circuit **10**.

As illustrated in the embodiment of FIG. 1, in a write operation, data **DATA[15:0]** may be provided directly to data inputs **din** of registers (**2** to **n**) via data bus **8** without write protection. Further, write signal **wr** may be provided directly to a write input terminal **w** of registers (**2** to **n**) from CPU **6**. However, in a write operation, data **DATA[15:0]** may not be applied directly to a data input **din** of register **1**. Instead, data **DATA[15:0]** may be applied to write protect circuit **10.** Likewise, in a write operation, write signal **wr** may not be applied directly as a control signal to a write input terminal **w** of register **1**. Instead write signal **wr** may be applied to write protect circuit **10.**

When a write command for any of registers (**1** through **n**) is executed, address **ADDRESS** may be provided from CPU to address decoder **9**. Address decoder **9** may activate a select signal (**sel_reg1** to **sel_regn**) corresponding to the address **ADDRESS**. A select signal **(sel_reg1** to **sel_regn)** may be received at a select input terminal **cs** of a respective register (**1** to **n**). An active select signal (**sel_reg1** to **sel_regn**) may have a logic high level. In this way, a predetermined register (**1** to **n**) may be selected in accordance with an address **ADDRESS**. For example, in a case where data is to be written to register **2**, select signal **sel_reg2** may become active (logic high) and data **DATA[15:0]** may be written from data bus **8** into register **2** when write signal **wr** pulses high. In contrast, when data is to be written to register **1**, select signal **sel_reg1** may become active (logic high). However, this may only complete step 1 **901** (FIG. 6) of a write operation to protected register **1**.

As explained above, a predetermined value may be directly written into registers (**2** through **n**), which are not write protected by applying a write signal **wr** from CPU **6**. However, because a write signal **wr_preg** applied to a write terminal **w** of register **1** is controlled by write protect circuit **10**, register **1** may not be written to unless a write operation following a specific sequence **600** (FIG. 6) is executed.

Write protect circuit **10** may provide a write control such that only when a write is executed in a specific sequence **600** will data be allowed to be written into register **1** (a protected register). For example, writing to a protected register may only be valid when performed according to the 3 steps (**901**, **902**, and **903**) as illustrated in sequence **600** of FIG. 6. Step 1 **901** may include executing a write command with data **DATA[15:0]** set as data (write data) to be written into register **1**. Step 2 **902** may include executing a write command with data **DATA[15:0]** set as inverse data (inverse write data) to be written into register 1. Step 3 **903** may include executing a write command with data **DATA[15:0]** set as data (write data) to be written into register **1**. Upon the detection of steps the 3 steps (**901**, **902**, and **903**) executed in succession, write protect circuit **10** may provide data **db[15:0]** and a write control signal **wr_preg** to allow write data to be written into register **1.**

At the time of the execution of step 1 **901** and step 2 **902**, the writing may still be deemed invalid and, as such, write protect circuit **10** may not output write signal (write pulse) **wr_preg**. Write signal (write pulse) **wr_preg** may only be output when a write operation includes the 3 steps (**901**, **902**, and **903**) executed in order.

In a case where step 1 **901** through step 3 **903** are not sequentially executed (for example another write operation is performed between step 1 **901** and step 2 **902** or between step 2 **902** and step 3 **903**), a sequence error may be protected and the write may become invalid. Once a write has become invalid, an attempted re-write may not be successful unless sequence **600** is completed beginning again from step 1 **901**.

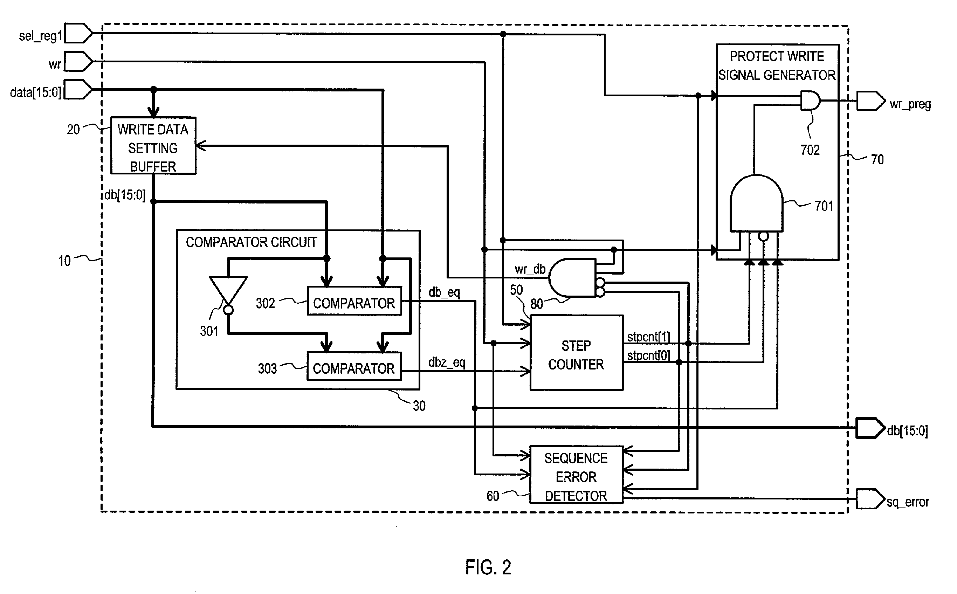

Referring now to FIG. 2, a circuit schematic diagram of write protect circuit **10** according to an embodiment is set forth.

Write protect circuit **10** may include a write data setting buffer **20**, a comparator circuit **30**, a step counter **50**, a sequence error detector **60**, a protect write signal generator **70**, and an AND element **80**.

Write data setting buffer **20** may receive data **data[15:0]** and a signal **wr_db** and may provide data **db[15:0]**. Write data setting buffer **20** may latch a value of data **data[15:0]** received at step 1 **901** to provide data **db[15:0]**. Write data setting buffer **20** may be a 16-bit buffer.

Comparator circuit **30** may receive data **data[15:0]** and data **db[15:0]** and may provide match signals (**db_eq** and **dbz_eq**). Comparator circuit **30** may perform data comparison. Comparator circuit **30** may include comparing units (**302** and **303**) and an inverter **301**. Comparing unit **302** may compare a value of data **data[15:0]** from bus **8** with latched data **db[15:0]** and output a match signal **db_eq**. Comparing unit **303** may receive inverted latched data **db[15:0]** through inverter **301**. Comparing unit **303** may compare a value of data **data[15:0]** from bus **8** with inverted latched data **db[15:0]** and output a match signal **dbz_eq**.

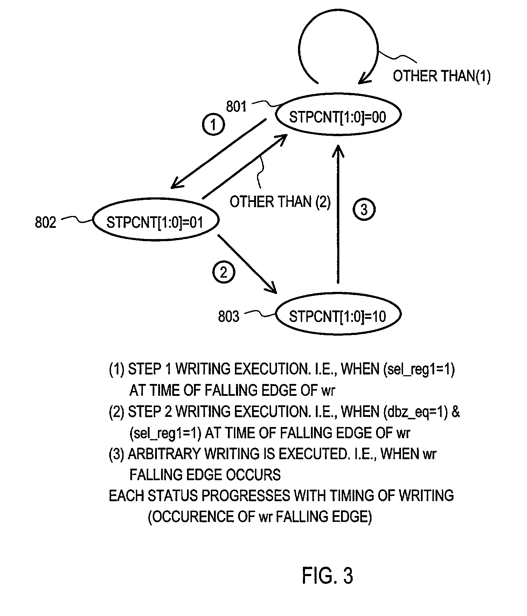

Step counter **50** may receive select signal **sel_reg1**, write signal **wr** and match signal **dbz_eq** and may provide a count signal **stpcnt[1:0].** Count signal **stpcnt[1:0]** may be a 2-bit count signal including count bits **(stpcnt[1]** and **stpcnt[0]).** A value of count signal **stpcnt[1:0]** may indicate a step of sequence **600** being carried out. Count signal **stpcnt[1:0]** = 00b (00b indicates count bit **stpcnt[1]** = 0 and count bit **stpcnt[0]** = 0, with b indicating binary), may indicate sequence **600** is not currently being carried out or followed. Count signal **stpcnt[1:0]** = 01b may indicate that step 1 **901** of sequence **600** has been completed. Count signal **stpcnt[1:0]** = 10b may indicate that step 2 **902** of sequence **600** has been completed. A status progression of count signal is illustrated in FIG. 3.

Referring now to FIG. 3, a state diagram illustrating a status progression of count signal **stpcnt[1:0]** according to an embodiment is set forth.

Step counter **50** may receive match signal **dbz_eq**, write signal **wr**, and select signal **sel_reg1** and provide count signal **stpcnt[1:0]** accordingly in response to an execution of a write command by CPU **6** (FIG. 1). More specifically, count signal **stpcnt[1:0]** may be set to a state (**801** to **803**) in response to a falling edge of write signal **wr** pulse provided by CPU **6.**

If count signal **stpcnt[1:0]** = 00b (state **801**) and step 1 **901** of a write operation is performed, count signal **stpcnt[1:0]** may progress to a value of 01b (state **802**). Then, if step 2 **902** of a write operation is performed, count signal **stpcnt[1:0]** may progress to a value of 10b (state **803**). When a different write occurs, count signal **stpcnt[1:0]** may return to a value of 00b. When count signal **stpcnt[1:0]** has a value of 10b and a write occurs, count signal **stpcnt[1:0]** may return to a value of 00b.

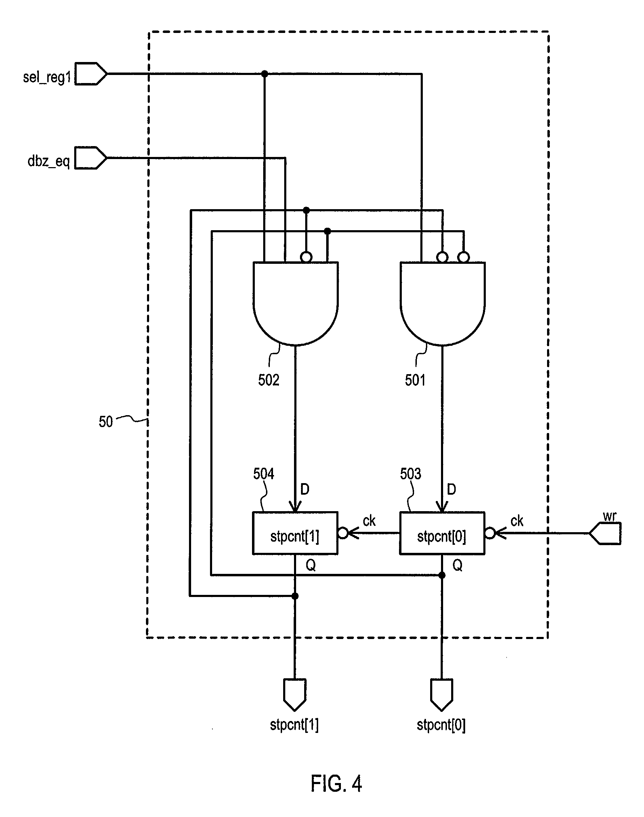

Referring now to FIG. 4, a circuit schematic diagram of step counter **50** according to an embodiment is set forth. Step counter **50** may provide count signal **stpcnt[1:0]** by following the state diagram illustrated in FIG. 3.

Step counter **50** may include AND gates (**501** and **502**) and flip-flop circuits (**503** and **504**). Flip-flop circuits (**503** and **504**) may be D-type flip-flop circuits. AND gate **501** may receive select signal **sel_reg1**, inverted count bit **stpcnt[0]** and inverted count bit **stpcnt[1]** and may provide a logical product output as an input to flip-flop circuit **503**. AND gate **502** may receive select signal **sel_reg1**, match signal **dbz_eq**, count bit **stpcnt[0]** and inverted count bit **stpcnt[1]** and may provide a logical product output as an input to flip-flop circuit **504**.

Flip-flop circuit **503** may receive the logical product output from AND gate **501** and write signal **wr**. Flip-flop circuit **503** may latch the logical product output from AND gate **501** in response to an inverted write signal **wr** (i.e. at a falling edge of write signal **wr**) to provide count bit **stpcnt[0]** of count signal **stpcnt[1:0]**. Flip-flop circuit **504** may receive the logical product output from AND gate **502** and write signal **wr**. Flip-flop circuit **504** may latch the logical product output from AND gate **502** in response to an inverted write signal **wr** (i.e. at a falling edge of write signal **wr**) to provide count bit **stpcnt[1]** of count signal **stpcnt[1:0]**.

Referring once again to FIG. 2, sequence error detector **60** may receive match signal **db_eq,** write signal **wr**, count signal **stpcnt[1:0]**, and select signal **sel_reg1** and may provide an error signal **sq_error**. Sequence error detector **60** may detect whether write sequence **600** has been performed normally (followed) or not. When write sequence **600** is not followed, sequence error detector **60** may provide error signal **sq_error** having an error logic state. Error signal **sq_error** may be provided to CPU **6** (FIG. 1) as a flag, an interrupt request or the like even though this connection is not illustrated in FIG. 1. Error signal **sq_error** may indicate that a different write operation was performed between step 1 **901** and step 2 **902** or between step 2 **902** and step 3 **903** in write sequence **600** (FIG. 6).

Examples of four cases will be given when error signal **sq_error** may indicate an invalid write (first write). For example, in a first case, a first write operation to a register other than protected register **1** may occur after step 1 **901**. In a second case, a first write operation may occur after step 1 **901** with a value other than inverted data (as compared to **data data[15:0]** in step 1 **901**). In a third case, a first write operation to a register other than protected register **1** may occur after step 2 **902**. In a fourth case, a first write operation may occur after step 2 **902** with a value other than data (**data data[15:0]** in step 1 **901**). When any of the four above-mentioned cases occur, sequence **600** has been interrupted or violated. In response to the violation of sequence **600**, writing to register **1** (a register protected by write protect circuit **10**) may be invalidated and thus, not take place and error signal **sq_error** may be output having an error logic state.

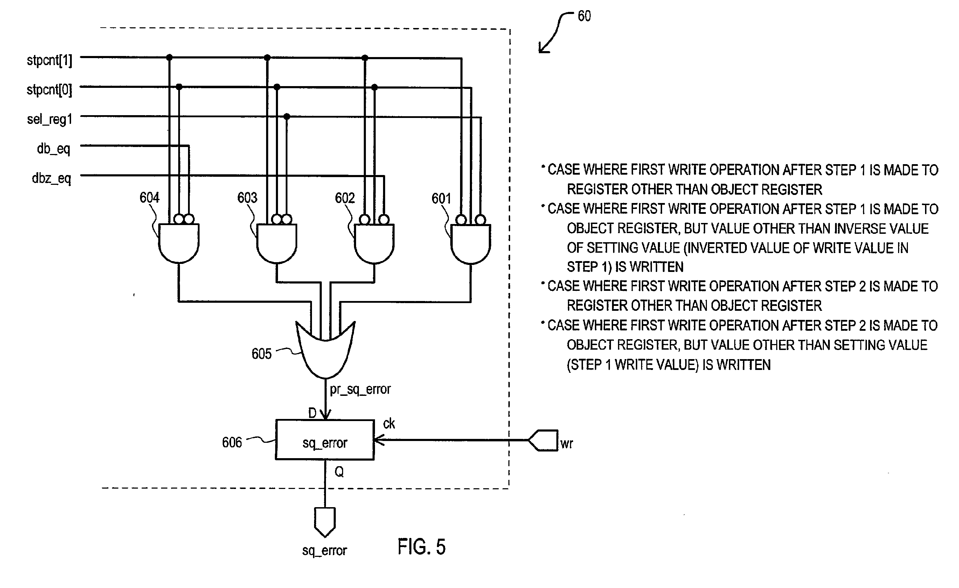

Referring now to FIG. 5, a circuit schematic diagram of sequence error detector **60** according to an embodiment is set forth.

Sequence error detector **60** may include AND gates (**601** to **604**), OR gate **605**, and flip-flop circuit **606**.

AND gate **601** may receive an inverted select signal **sel_reg1**, inverted step count bit **stpcnt[1]**, and step count bit **stpcnt[0]** and may provide an output as an input to OR gate **605**. AND gate **602** may receive step count bit **stpcnt[0]**, inverted step count bit **stpcnt[1]**, and inverted match signal **dbz_eq** and may provide an output as an input to OR gate **605**. AND gate **603** may receive an inverted select signal **sel_reg1**, step count bit **stpcnt[1]**, and inverted step count bit **stpcnt[0]** and may provide an output as an input to OR gate **605**. AND gate **604** may receive an inverted match signal **db_eq,** step count bit **stpcnt[1],** and inverted step count bit **stpcnt[0]** and may provide an output as an input to OR gate **605**.

OR gate **605** may provide an output signal **pr_sq_error** as an input to flip-flop **606**.

Flip-flop **606** may be a D-type flip-flop. Flip-flop **606** may receive write signal **wr** at a clock input **ck** and may output error signal **sq_error.** Flip-flop **606** may latch the received signal **pr_sq_error** to provide error signal **sq_error** in response to a rising edge of write signal **wr**.

The above-mentioned first case may be detected by AND gate **601**. The second case may be detected with AND gate **602**. The third case may be detected with AND gate **603**. The fourth case may be detected with AND gate 604. Output signals from AND gates (**601** to **604**) may be respectively provided as inputs to OR gate **605** to generate output signal **pr_sq_error** which may be latched by flip-flop **606** in response to a rising edge of write signal wr and output as error signal **sq_error**.

Referring once again to FIG. 2, protect write signal generator **70** may receive select signal **sel_reg1**, write signal **wr**, count signal **stpcnt[1:0]**, and match signal **db_eq** and may provide a write signal **wr_preg.** Protect write signal generator **70** may include AND gate **701** and AND gate **702**.

AND gate **701** may receive write signal **wr**, count bit **stpcnt[1],** inverted count bit **stpcnt[0]**, and match signal **db_eq** as inputs and may provide an output signal as an input to AND gate **702**. AND gate **702** may receive select signal **sel_reg1** as an input and may output write signal **w_preg**.

AND gate **701** may detect an execution of step 3 **903** indicating that the sequence **600** has been followed. AND gate **702** may detect that protected register **1** is the selected register being written to. AND gate **702** may generate write signal **w_preg** if the output of AND gate **701** is a high logic level and select signal **sel_reg1** is high (indicating register **1** is selected).

AND gate 80 may receive select signal **sel_reg1,** write signal **wr**, inverted count bit **stpcnt[1],** and inverted count bit **stpcnt[0]** as inputs and may output a signal **wr_db.** Signal **wr_db** may be provided to write data setting buffer **20** to trigger the latching of data **data[15:0]** to provide data **db[15:0].** AND gate **80** may detect an execution of step 1 **901** (FIG. 6) indicating sequence **600** may be followed. Signal **wr_db** may be generated when select signal **sel_reg1** has a high logic value, write signal **wr** has a high logic value, and count signal **stpcnt[1:0]** = 00 (i.e. count bit **stpcnt[1]** = 0 and count bit **stpcnt[0]** = 0). In this way, AND gate **80** may detect an execution of a step 1 of sequence **600** for a write to a protected register **1** and **data data[15:0]** on data bus **8** may be latched by write data setting buffer **20** and used for verification of subsequent steps (step 2 **902** and step 3 **903**).

The operation of the system **100** including write protect circuit **10** will now be explained.

First, an operation where a write to a protected register using sequence **600** will be explained.

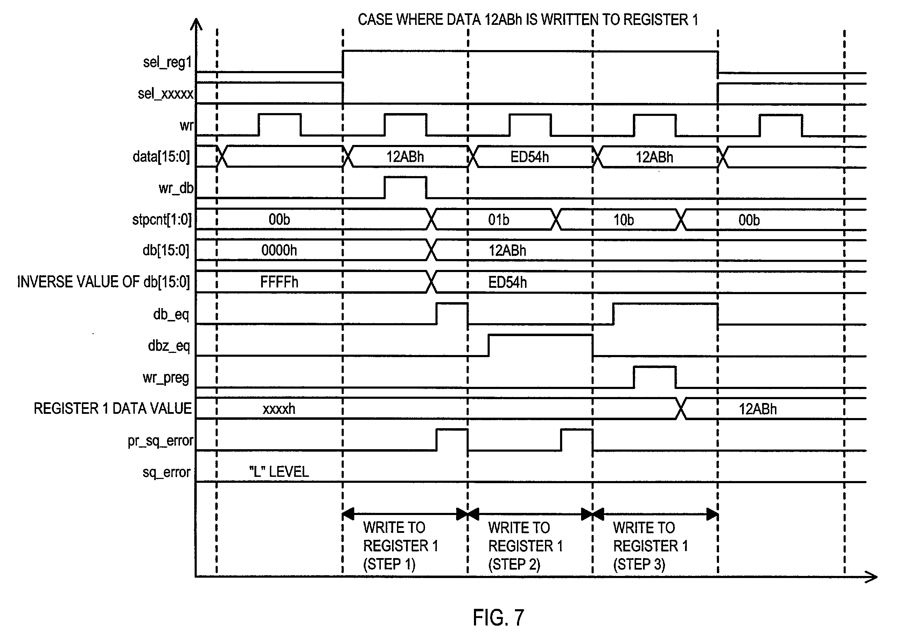

Referring to FIG. 7, a timing diagram of a write to a protected register using sequence **600** according to an embodiment is set forth. The timing diagram of FIG. 7 illustrates a write of data **DATA[15:0]** = 12ABh (h indicates that 12AB is a hexidecimal number) into register **1** following sequence **600** shown in FIG. 6.

Referring now to FIG. 7 in conjunction with FIGS. 1 to 6, a write command may be executed to register **1** as step 1 **901.** In step 1 **901,** select signal **sel_reg1** may become active (high) while other select signals (**sel_reg2** to **sel_regn**) may be low (illustrated as signal **sel_xxxxx** in FIG. 7). Also, in step 1 **901**, CPU **6** may apply a value of 12ABh as data **data[15:0]** to data bus **8** and may provide write signal **wr** having a pulse. Because at this time step counter **60** outputs a count signal **stpcnt[1:0]** = 00b, AND gate **80** may output a signal **wr_db** as a pulse (following write signal **wr**). In response to signal **wr_db**, write data setting buffer **20** may latch received data **data[15:0]** and provide data **db[15:0]** having a value of 12ABh to comparator circuit **302**. Inverter **301** may provide inverted data having a value of ED54h to comparator circuit **303**. In this case, comparator circuit **302** may detect a match between data **data[15:0]** and data **db[15:0]** and may output a match signal **db_eq** having a high logic level. However, comparator circuit **303** may not detect a match between data **data[15:0]** and inverted data **db[15:0]** and may output a match signal **dbz_eq** having a low logic level.

Also, at this time, AND gate **501** in step counter **50** may be enabled (in response to count signal **stpcnt[1:0]** = 00b and select signal **sel_reg1** being high) and may provide a high output as an input to flip-flop circuit **503**. As a result, flip-flop **503** may latch a high level count bit **stpcnt[0]** in response to a falling edge of write signal **wr**. In this way, count signal **stpcnt[1:0]** may advance to a value of 01b. However, because at this time write signal **wr** has returned to a logic low and count signal **stpcnt[1:0]** = 01b, protect write signal generator **70** may not generate write signal **wr_preg.** Thus, contents of register **1** may not be modified in response to a write command of step 1 **901**.

Next, another write command may be executed as step 2 **902**. In step 2 **902**, select signal **sel_reg1** may remain high while other select signals (**sel_reg2** to **sel_regn**) may be low (illustrated as signal **sel_xxxxx** in FIG. 7). Also, in step 2 **902**, CPU **6** may apply a value of ED54h as data **data[15:0]** to data bus **8** and may provide write signal **wr** having a pulse. In this case, comparator circuit **303** may detect a match between data **data[15:0]** and inverted data **db[15:0]** and may output a match signal **dbz_eq** having a high logic level. However, comparator circuit **302** may not detect a match between data **data[15:0]** and data **db[15:0]** and may output a match signal **db_eq** having a low logic level.

Also, at this time, AND gate **501** in step counter **50** may be disabled (in response to count signal bit **stpcnt[0]** = 1b) and may provide a low output as an input to flip-flop circuit **503**. Also, at this time, AND gate **502** in step counter **50** may be enabled (in response to count signal **stpcnt[1:0]** = 01b, select signal **sel_reg1** being high, and match signal **dbz_eq** being high) and may provide a high output as an input to flip-flop circuit **504**. As a result, flip-flop **503** may latch a high level count bit **stpcnt[1]** and flip-flop **502** may latch a low level count bit **stpcnt[0]** in response to a falling edge of write signal **wr**. In this way, count signal **stpcnt[1:0]** may advance to a value of 10b. However, because at this time, write signal **wr** has returned to a logic low and match signal **db_eq** is low, protect write signal generator **70** may not generate write signal **wr_preg.** Thus, contents of register **1** may not be modified in response to a write command of step 2 **902**.

Next, another write command may be executed as step 3 **903**. In step 3 **903**, select signal **sel_reg1** may remain high while other select signals (**sel_reg2** to **sel_regn**) may be low (illustrated as signal **sel_xxxxx** in FIG. 7). Also, in step 3 **903**, CPU **6** may apply a value of 12ABh as data **data[15:0]** to data bus **8** and may provide write signal **wr** having a pulse. In this case, comparator circuit **302** may detect a match between data **data[15:0]** and **db[15:0]** and may output a match signal **db_eq** having a high logic level. However, comparator circuit **303** may not detect a match between data **data[15:0]** and inverted data **db[15:0]** and may output a match signal **dbz_eq** having a low logic level.

At this time, AND gate **701** in protect write signal generator **70** may provide a high output (because count signal **stpcnt[1:0]** = 10b, write signal **wr** is high, and match signal **db_eq** is high). Thus, AND gate **702** may generate write signal **wr_preg**. Write signal **wr_preg** may be a pulse essentially following write signal wr during step 3 **903**.

In response to write signal **wr_preg** having a pulse and select signal **sel_reg1** being high, data **db[15:0]** (12ABh in the present example as latched by write data setting buffer **20**) may be written into register **1**.

Also, during step 3 **903,** in response to count signal **stpcnt[1:0]** = 10b, AND gates (**502** and **503**) may both provide logic low outputs. As a result, flip-flop **503** may latch a low level count bit **stpcnt[1]** and flip-flop **502** may latch a low level count bit **stpcnt[0]** in response to a falling edge of write signal **wr**. In this way, count signal **stpcnt[1:0]** may return to a value of 00b. It is noted that count signal **stpcnt[1:0]** may return to a value of 00b after write signal **wr_preg** has been generated during step 3 **903**.

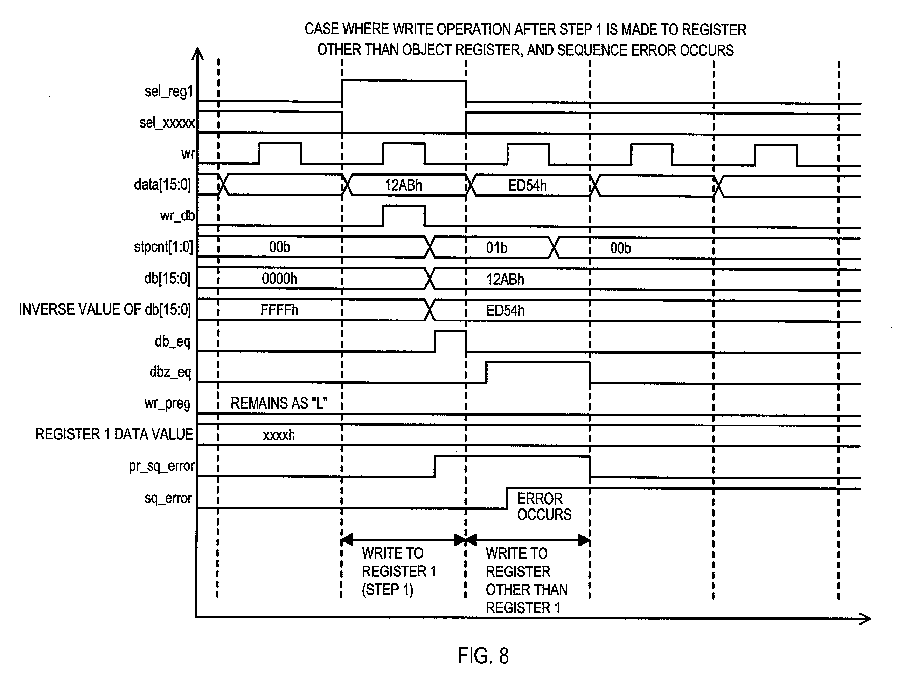

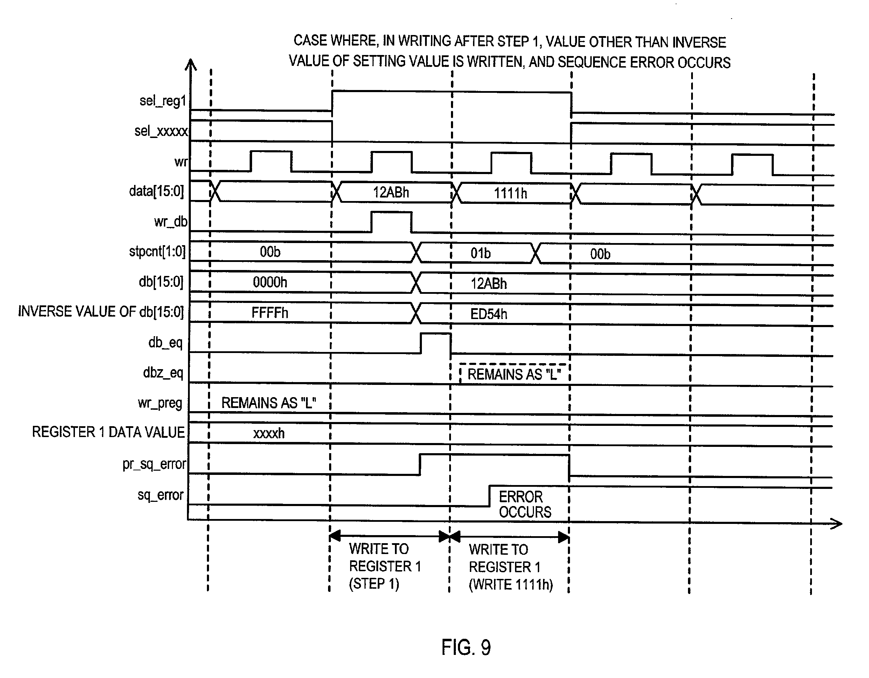

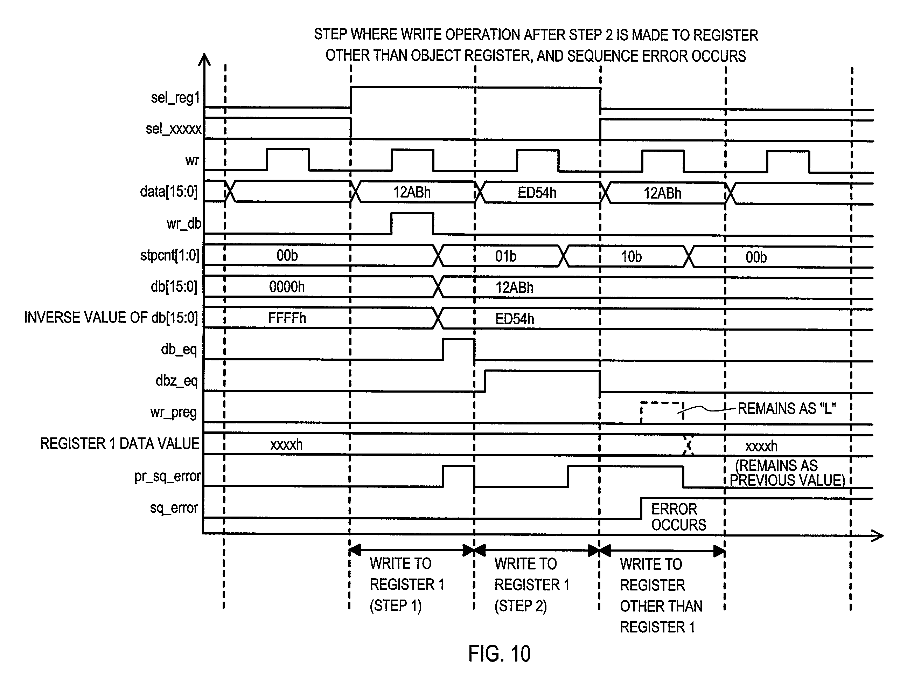

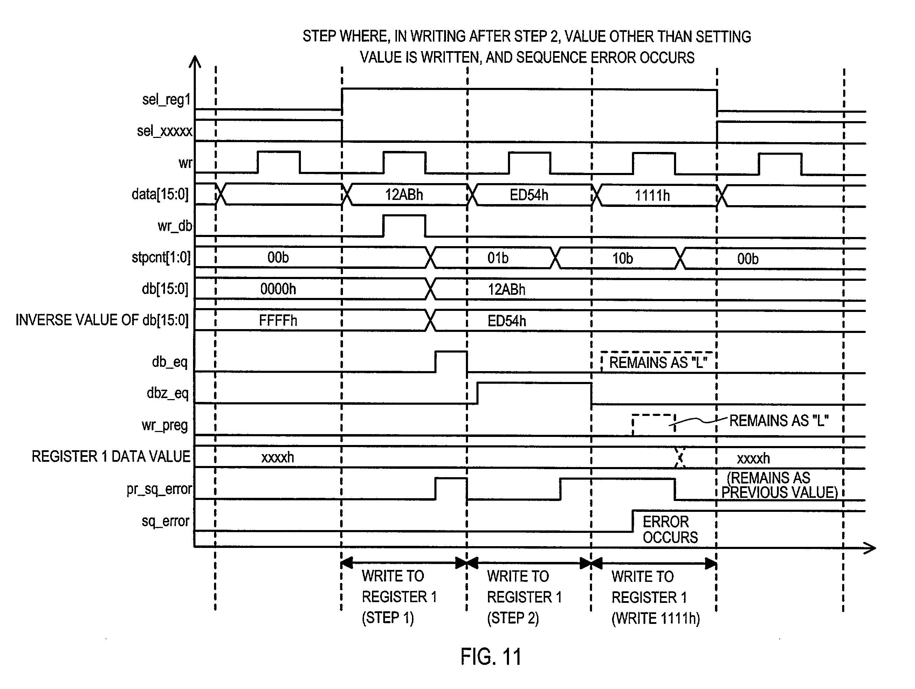

Now, using timing diagrams of FIGS. 8, 9, 10, and 11, an explanation will be made for cases where a write sequence is initiated to register **1**, however, sequence **600** is not followed and the write becomes invalid. The timing diagrams of FIGS. 8, 9, 10, and 11 may respectively illustrate the four above-mentioned cases. FIG. 8 may illustrate a first case, where an erroneous write operation to a register other than protected register **1** may occur after step 1 **901**. FIG. 9 may illustrate a second case, where an erroneous write operation may occur after step 1 **901** with a value other than inverted data (as compared to data **data[15:0]** in step 1 **901**). FIG. 10 may illustrate a third case, where an erroneous write operation to a register other than protected register **1** may occur after step 2 **902**. FIG. 11 may illustrate a fourth case, where an erroneous write operation may occur after step 2 **902** with a value other than data (**data data[15:0]** in step 1 **901**).

Referring now to FIG. 8, a timing diagram illustrating a case where an erroneous write operation to a register other than protected register **1** may occur after step 1 **901** according to an embodiment is set forth.

Referring now to FIG. 8 in conjunction with FIGS. 1 to 6, a write command may be executed to register **1** as step 1 **901**. Step 1 **901** in FIG. 8 may be essentially the same as step 1 **901** illustrated in the timing diagram of FIG. 7.

Next, a write (after step 1) is made to a register other than register **1**. Thus, select signal **sel_reg1** may change from high to low. AND gate **601** in sequence error detector may receive the low select signal **sel_reg1** and count signal **stpcnt[1:0]** = 01b and may provide a high output. In this way, OR gate **605** may provide an output signal **pr_sq_error** having a high logic level. Flip-flop **606** may then provide an error signal **sq_error** having a high logic level upon a rising edge of write signal **wr**.

Also, with select signal **sel_reg1** having a low logic level, AND gates (**501** and **502**) in step counter **50** may each provide an output having a low logic level. In this way, count signal **stpcnt[1:0]** may be reset to 00b on a falling edge of write signal **wr**.

Referring now to FIG. 9, a timing diagram illustrating a case where an erroneous write operation may occur after step 1 **901** with a value other than inverted data (as compared to data **data[15:0]** in step 1 **901**) according to an embodiment is set forth.

Referring now to FIG. 9 in conjunction with FIGS. 1 to 6, a write command may be executed to register **1** as step 1 **901**. Step 1 **901** in FIG. 9 may be essentially the same as step 1 **901** illustrated in the timing diagram of FIG. 7.

Next, a write (after step 1) is made to register **1** with data **data[15:0]** having a value other than inverted data (as compared to data **data[15:0]** in step 1 **901**). For example, data **data[15:0]** may have a value of 1111h while inverted data **data[15:0]** (from step 1) may have a value of ED54h. Thus, match signal **dbz_eq** may remain at a low logic level. AND gate **602** in sequence error detector may receive the low match signal **dbz_eq** and count signal **stpcnt[1:0]** = 01b and may provide a high output. In this way, OR gate **605** may provide an output signal **pr_sq_error** having a high logic level. Flip-flop **606** may then provide an error signal **sq_error** having a high logic level upon a rising edge of write signal **wr**.

Also, with match signal **dbz_eq** having a low logic level, AND gate **502** in step counter **50** may provide an output having a low logic level. Also, because counter bit **stpcnt[0]** =1, AND gate **501** may provide an output having a low logic level. In this way, count signal **stpcnt[1:0]** may be reset to 00b on a falling edge of write signal **wr**.

Referring now to FIG. 10, a timing diagram illustrating a case where an erroneous write operation to a register other than protected register **1** may occur after step 2 **902** according to an embodiment is set forth.

Referring now to FIG. 10 in conjunction with FIGS. 1 to 6, a write commands may be executed to register **1** as step 1 **901** and step 2 **902**. Step 1 **901** and step 2 **902** in FIG. 10 may be essentially the same as Step 1 **901** and step 2 **902** illustrated in the timing diagram of FIG. 7.

Next, a write (after step 2) is made to a register other than register **1**. Thus, select signal **sel_reg1** may change from high to low. AND gate **603** in sequence error detector may receive the low select signal **sel_reg1** and count signal **stpcnt[1:0]** = 10b and may provide a high output. In this way, OR gate **605** may provide an output signal **pr_sq_error** having a high logic level. Flip-flop **606** may then provide an error signal **sq_error** having a high logic level upon a rising edge of write signal **wr**.

Also, with select signal **sel_reg1** having a low logic level, AND gates (**501** and **502**) in step counter **50** may each provide an output having a low logic level. In this way, count signal **stpcnt[1:0]** may be reset to 00b on a falling edge of write signal **wr**. Furthermore, with select signal **sel_reg1** having a low logic level, AND gate **702** in protect write signal generator **70** may provide a write signal **wr_preg** having a logic low level and a write to register **1** may be prevented.

Referring now to FIG. 11, a timing diagram illustrating a case where an erroneous write operation may occur after step 2 **902** with a value other than data (as compared to data **data[15:0]** in step 1 **901**) according to an embodiment is set forth.

Referring now to FIG. 11 in conjunction with FIGS. 1 to 6, a write commands may be executed to register **1** as step 1 **901** and step 2 **902**. Step 1 **901** and step 2 **902** in FIG. 11 may be essentially the same as step 1 **901** and step 2 **902** illustrated in the timing diagram of FIG. 7.

Next, a write (after step 2) is made to register **1** with data **data[15:0]** having a value other than data **data[15:0]** in step 1 **901**. For example, data **data[15:0]** may have a value of 1111h while data **db[15:0]** (from step 1) may have a value of 12ABh. Thus, match signal **db_eq** may remain at a low logic level. AND gate **604** in sequence error detector **60** may receive the low match signal **db_eq** and count signal **stpcnt[1:0] =** 10b and may provide a high output. In this way, OR gate **605** may provide an output signal **pr_sq_error** having a high logic level. Flip-flop **606** may then provide an error signal **sq_error** having a high logic level upon a rising edge of write signal **wr**.

Also, in accordance with the state diagram of FIG. 3, because an arbitrary write is executed when step counter **50** is in state **803**, count signal **stpcnt[1:0]** may be reset to 00b (state **801**) on a falling edge of write signal **wr**. Furthermore, with match signal **db_eq** having a low logic level, AND gate **701** in protect write signal generator **70** may provide an output having a logic low. In this way, AND gate **702** may provide a write signal **wr_preg** having a logic low level and a write to register **1** may be prevented.

Thus, writing to a register **1** that is protected may be valid only when a write sequence is performed in accordance with sequence **600**. Therefore, when a write command intended for a register (**2** to **n**), which is not protected, for example, and erroneously is performed for a register **1** which is protected, the write may not be allowed and may be invalidated. In this way, values stored in a control register **1**, for example, which may significantly influence a system may be protected. In contrast, in a conventional system, erroneous writing to registers may occur due to CPU runaway or the like.

A write sequence **600** may be performed having 3 steps. Write data **db[15:0]** (either inverted or not inverted) may be compared with data **data[15:0]** on a data bus **8** in step 1 **901**, step 2 **902**, and step 3 **903**. In this way, it may be confirmed whether or not write data **db[15:0]** is erroneous or is the intended write data. Thus, even in a case where unexpected data corruption occurs on data bus **8**, the write may be invalidated and a write of erroneous data to register **1** may be prevented.

For data corruption on a data bus **8**, a method exists for providing an extra bit (parity bit) for error correction and the like. However, in accordance with the present embodiment, it may not be necessary to add an extra bit to data bus **8**. In this way, board area may be reduced and error correction circuitry may be eliminated.

Further, a method may be possible in which only hardware for temporarily storing the write data is needed and the data comparison (checking to see if write data is valid) may be performed by software. However, in this case, the software for valid data detection may increase the program code and time required for writing to a register. In comparison, by only executing a write command 3 times as in the present embodiment, the amount of program code may be minimized and the time required for writing to a register may be relatively short.

Further, because the data **data[15:0]** on data bus **8** has to transition from write data to inverted write data at step 2 **902**, even if runaway by CPU **6** or the like causes the same command code to be repeatedly executed where a write is continuously executed to the same register, if the register is protected, the writing may be invalidated.

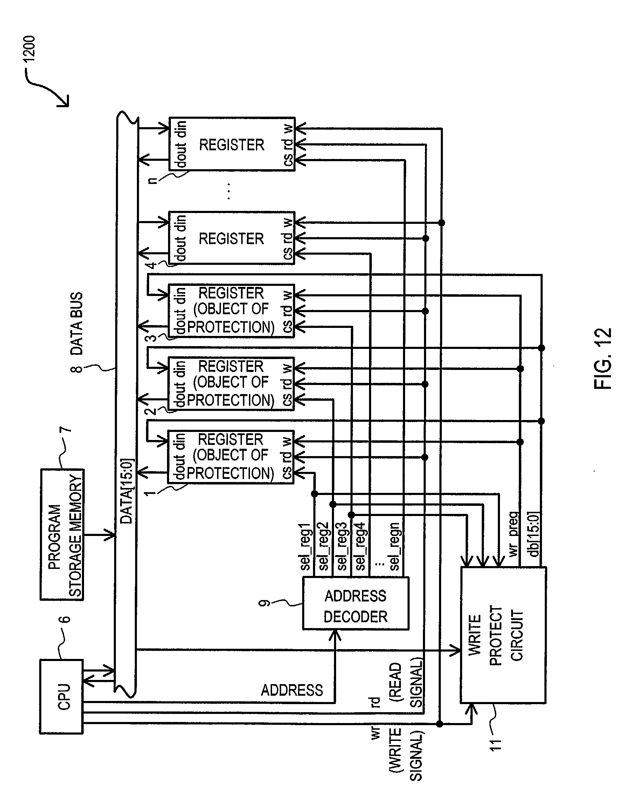

Another embodiment of the present invention will now be explained with reference to FIGS. 12 through 18. The embodiment illustrated in FIGS. 12 through 18 may have similar constituents as the embodiment illustrated in FIGS. 1 through 11, such constituents may be referred to by the same reference character.

Referring now to FIG. 12, a block schematic diagram of a system including a write protect circuit is set forth according to an embodiment and given the general reference character **1200**. System **1200** may differ from system **100** of FIG. 1 in that 3 registers (**1** to **3**) may be write protected.

System **1200** may differ from system **100** of FIG. 1, in that system **1200** may include a write protect circuit **11**. Write protect circuit **11** may only permit data to be written into any of registers (**1** to **3**) when a write operation is performed according to a specific sequence.

A predetermined value may be directly written into registers (**4** through **n**), which are not write protected by applying a write signal **wr** from CPU **6**. However, because a write signal **wr_preg** applied to a write terminal **w** of registers (**1** to **3**) is controlled by write protect circuit **11**, registers (**1** to **3**) may not be written to unless a write operation following a specific sequence **600** (FIG. 6) is executed.

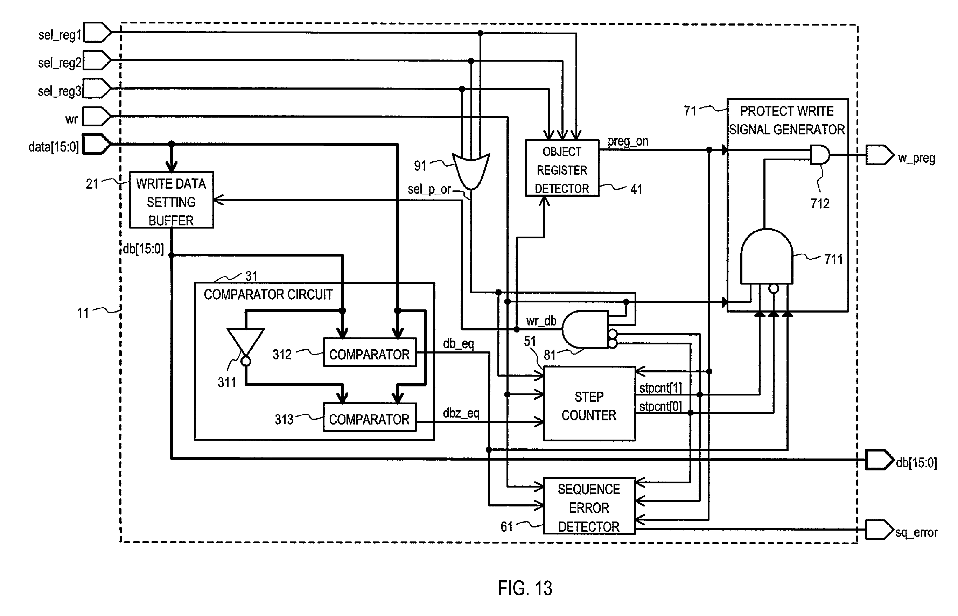

Referring now to FIG. 13, a circuit schematic diagram of write protect circuit **11** according to an embodiment is set forth.

Write protect circuit **11** may include a write data setting buffer **21**, a comparator circuit **31**, an object register detector **41**, a step counter **51**, a sequence error detector **61**, a protect write signal generator **71**, an AND gate **81**, and an OR gate **91**.

Write data setting buffer **21** may receive data **data[15:0]** and a signal **wr_db** and may provide data **db[15:0]**. Write data setting buffer **21** may latch a value of data **data[15:0]** received at step 1 **901** to provide data **db[15:0]**. The construction of write data setting buffer **21** may be similar to write data setting buffer **20** of FIG. 2, so detailed explanation thereof is omitted.

Comparator circuit **31** may receive data **data[15:0]** and data **db[15:0]** and may provide match signals (**db_eq** and **dbz_eq**). Comparator circuit **31** may perform data comparison. Comparator circuit **31** may include comparing units (**312** and **313**) and an inverter **311**. The construction of comparator circuit **31** may be similar to comparator circuit **30** of FIG. 2, so detailed explanation thereof is omitted.

Sequence error detector **61** may receive match signal **db_eq,** write signal wr, count signal **stpcnt[1:0],** and a detection signal **preg_on** and may provide an error signal **sq_error.** Sequence error detector **61** may receive detection signal **preg_on** as compared to sequence error detector **60** of FIG. 2, which may receive select signal **sel_reg1**. Otherwise, the construction of sequence error detector **61** may be similar to sequence error detector **60** of FIG. 2, so detailed explanation thereof is omitted.

Protect write signal generator **71** may receive detection signal **preg_on,** write signal wr, count signal **stpcnt[1:0]**, and match signal **db_eq** and may provide a write signal **wr_preg**. Protect write signal generator **71** may include AND gate **711** and AND gate **712**. Protect write signal generator **71** may receive detection signal **preg_on** as compared to protect write signal generator **70** of FIG. 2, which may receive select signal **sel_reg1**. Otherwise, the construction of protect write signal generator **71** may be similar to protect write signal generator **70** of FIG. 2, so detailed explanation thereof is omitted.

AND gate **81** may receive protected select signal **sel_p_or**, write signal **wr**, inverted count bit **stpcnt[1],** and inverted count bit **stpcnt[0]** as inputs and may output a signal **wr_db**. AND gate **81** may receive protected select signal **sel_p_or** as compared to AND gate **80** of FIG. 2, which may receive select signal **sel_reg1**. Otherwise, the construction of AND gate **81** may be similar to AND gate **80** of FIG. 2, so detailed explanation thereof is omitted.

Object register detector **41** may receive select signals (**sel_reg1** to **sel_reg3**) and signal **wr_db** and may provide detection signal **preg_on**. Object register detector **41** may detect whether the write operation following sequence **600** is being performed to the same protected register (**sel_reg1** to **sel_reg3**).

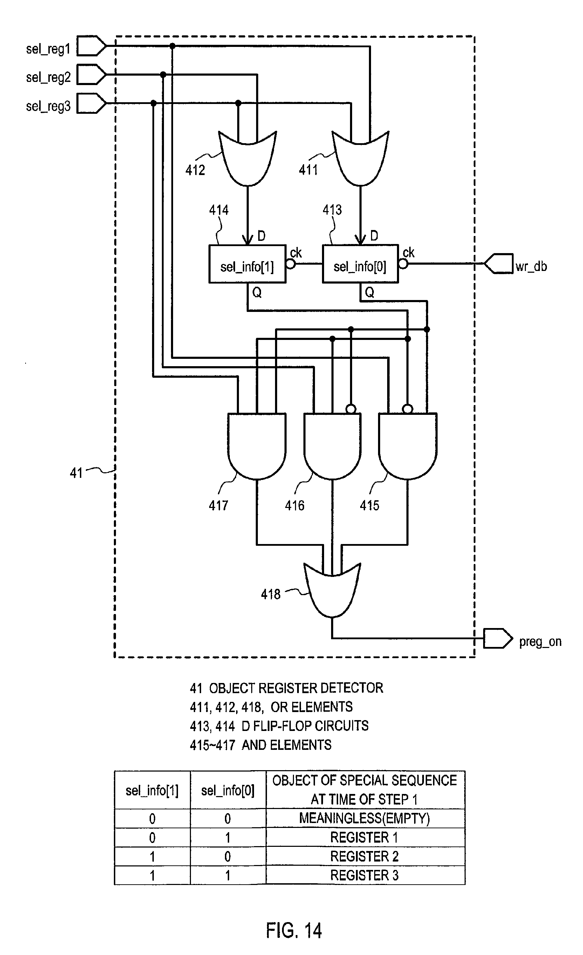

Referring now to FIG. 14, a circuit schematic diagram of object register detector **41** according to an embodiment is set forth.

Object register detector **41** may include OR gates (**411**, **412**, and **418**), flip-flops (**413** and **414**), and AND gates (**415** to **417**).

OR gate **411** may receive select signals (**sel_reg1** and **sel_reg3**) and may provide an output as an input to flip-flop **413**. OR gate **412** may receive select signals (**sel_reg2** and **sel_reg3**) and may provide an output as an input to flip-flop **414**. Flip-flop **413** may receive signal **wr_db** and may latch a received input from OR gate **411** on a falling edge of signal **wr_db**. Flip-flop **414** may receive signal **wr_db** and may latch a received input from OR gate **412** on a falling edge of signal **wr_db**. Flip-flops (**413** and **414**) may each be D-type flip-flops. AND gate **415** may receive an output from flip-flop **413**, an inverted output from flip-flop **414**, and select signal **sel_reg2** and may provide an output to an input of OR gate **418.** AND gate **416** may receive an inverted output from flip-flop **413**, an output from flip-flop **414**, and select signal **sel_reg1** and may provide an output to an input of OR gate **418**. AND gate **417** may receive an output from flip-flop **413**, an output from flip-flop **414**, and select signal **sel_reg3** and may provide an output to an input of OR gate **418**. OR gate **418** may provide detection signal **preg_on** as an output.

In FIG. 14, a value latched in flip-flop **413** may be referred to as **sel_info[0].** A value latched in flip-flop **414** may be referred to as **sel_info[1].** Values (**sel_info[0]** and **sel_info[1])** may indicate the register (**1** to **3**) that is addressed during the write operation of step 1 **601** of sequence **600**. Values (**sel_info[0]** and **sel_info[1])** may indicate a register (**1** to **3**) in accordance with the table illustrated in FIG. 14.

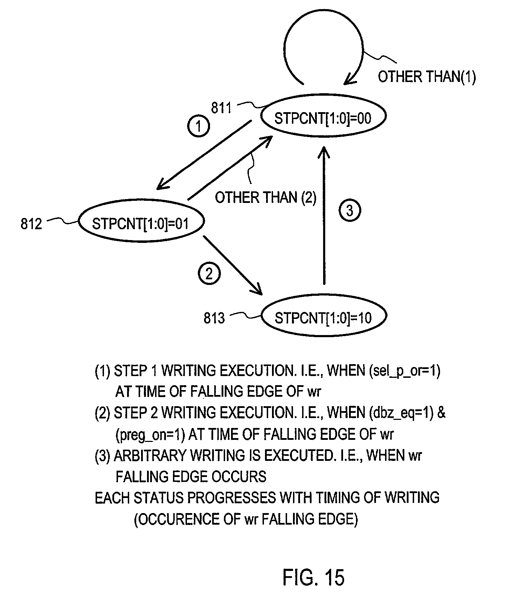

Referring now to FIG. 15, a state diagram illustrating a status progression of count signal **stpcnt[1:0]** according to an embodiment is set forth.

Step counter **51** may receive match signal **db_eq**, write signal **wr**, and protected select signal **sel_p_or** and provide count signal **stpcnt[1:0]** accordingly in response to an execution of a write command by CPU **6** (FIG. 1). More specifically, count signal **stpcnt[1:0]** may be set to a state (**811** to **813**) in response to a falling edge of write signal **wr** pulse provided by CPU **6**.

If count signal **stpcnt[1:0]** = 00b (state **811**) and step 1 **901** of a write sequence **600** is performed to a protected register (**1** to **3**), count signal **stpcnt[1:0]** may progress to a value of 01b (state **812).** Then, if step 2 **902** of a write sequence **600** is performed to the same protected register (**1** to **3**), count signal **stpcnt[1:0]** may progress to a value of 10b (state **813**). When a different write occurs than in write sequence **600**, count signal **stpcnt[1:0]** may return to a value of 00b. When count signal **stpcnt[1:0]** has a value of 10b and a write occurs, count signal **stpcnt[1:0]** may return to a value of 00b.

Value **sel_info[1:0]** latched by flip-flops (**413** and **414**) may be updated by a the writing performed when count signal **stpcnt[1:0]** has a value of 00b (**811**). Value **sel_info[1:0]** stored by flip-flops (**413** and **414**) may be treated as information indicating a protected register in accordance with an address **ADDRESS** value at step 1 **901** (FIG. 6). AND gates (**415** to **417**) may detect whether the address **ADDRESS** corresponds to the same protected register as indicated by value **sel_info[1:0]** in subsequent steps (step 2 **902** and step 3 **903**). Each AND gate (**415** to **417**) may provide an output to OR gate **418**. In this way, OR gate **418** may provide a detection signal **preg_on** to indicate whether or not the same protected register (**1** to **3**) is being addressed during each step of sequence **600**.

Object register detector **41** may be unnecessary when only one register is a protected register. However, when there are a plurality of protected registers, object register detector **41** may be necessary in order to determine the same protected register is being addressed in each step of sequence **600**. If only two registers are protected registers, only a single bit may be latched (stored) in a flip-flop (or storing circuit). If three or four registers are protected registers, two bits may be latched (stored) in a flip-flop (or storing circuit). If five to seven registers are protected registers, three bits may be latched (stored) in a flip-flop (or storing circuit).

Because there is a plurality of registers to be protected (registers (**1** to **3**)) in the system **1200** illustrated in FIG. 12, step counter **51** in write protect circuit **11** may have a slightly different configuration as compared to step counter **50** in write protect circuit **10** illustrated in FIG. 2. In particular, as illustrated in the state diagram of FIG. **15**, at the time of writing in accordance with step 1 **811** (the case where protected select signal **sel_p_or** = 1 at the falling edge of write signal **wr**), protected select signal **sel_p_or** may be used as a trigger to increment count bit **stpcnt[0]** from 0 to 1. In step counter **50** in write protect circuit **10** illustrated in FIG. 2, select signal **sel_reg1** may be used as a trigger to increment count bit **stpcnt[0]** from 0 to 1. At the time of writing in accordance with step 2 **812** (the case where match signal **dbz_eq** =1 and detection signal **preg_on** =1 at the falling edge of write signal **wr**), detection signal **preg_on** may be used as a trigger to increment count bit **stpcnt[0]** from 0 to 1. In step counter **50** in write protect circuit **10** illustrated in FIG. 2, select signal **sel_reg1** may be used as a trigger to increment count bit **stpcnt[0]** from 0 to 1.

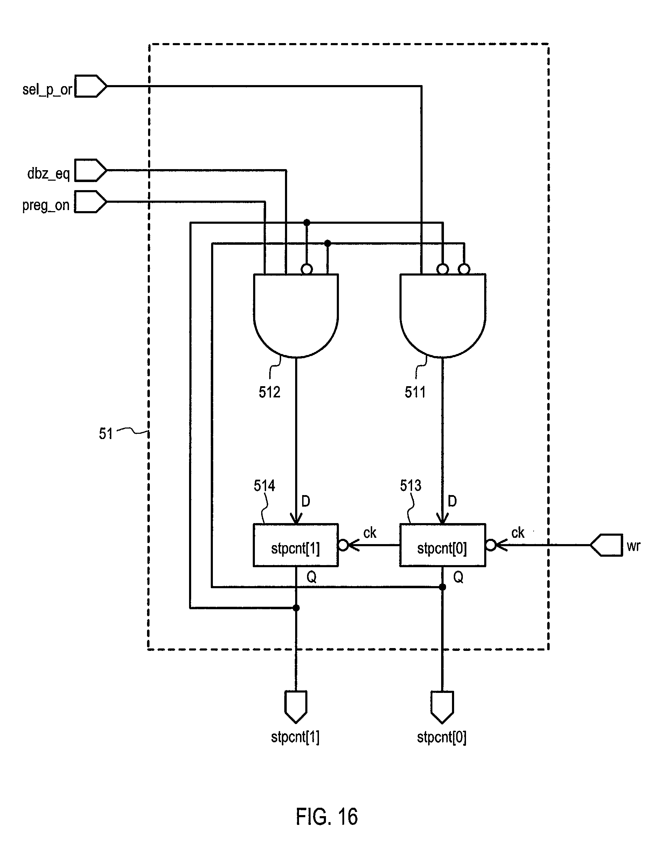

Referring now to FIG. **16** a circuit schematic diagram of step counter **51** according to an embodiment is set forth. Step counter **51** may provide count signal **stpcnt[1:0]** by following the state diagram illustrated in FIG. 15.

Step counter **51** may include AND gates (**511** and **512**) and flip-flop circuits (**513** and **514**). Flip-flop circuits (**513** and **514**) may be D-type flip-flop circuits. AND gate **511** may receive protected select signal **sel_p_or**, inverted count bit **stpcnt[0]** and inverted count bit **stpcnt[1]** and may provide a logical product output as an input to flip-flop circuit **513**. AND gate **512** may receive detection signal **preg_on**, match signal **dbz_eq**, count bit **stpcnt[0]** and inverted count bit **stpcnt[1]** and may provide a logical product output as an input to flip-flop circuit **514**.

Flip-flop circuit **513** may receive the logical product output from AND gate **511** and write signal **wr**. Flip-flop circuit **513** may latch the logical product output from AND gate **511** in response to an inverted write signal **wr** (i.e. at a falling edge of write signal **wr**) to provide count bit **stpcnt[0]** of count signal **stpcnt[1:0]**. Flip-flop circuit **514** may receive the logical product output from AND gate **512** and write signal **wr**. Flip-flop circuit **514** may latch the logical product output from AND gate **512** in response to an inverted write signal **wr** (i.e. at a falling edge of write signal **wr**) to provide count bit **stpcnt[1]** of count signal **stpcnt[1:0].**

Referring once again to FIG. 13, OR gate **91** may receive select signals (**sel_reg1** to **sel_reg3**) and may generate protected select signal **sel_p_or**. Protected select signal **sel_p_or** may indicate whether or not a protected register has been addressed or selected. Protected select signal **sel_p_or** may be provided to step counter **51** and AND gate **81**.

The operation of system **1200** including write protect circuit **11** will now be explained. System **100** (FIG. 1) may differ from system **1200** in that there are three protected registers (**1** to **3**). However, the basic operations are similar and explanations may be omitted.

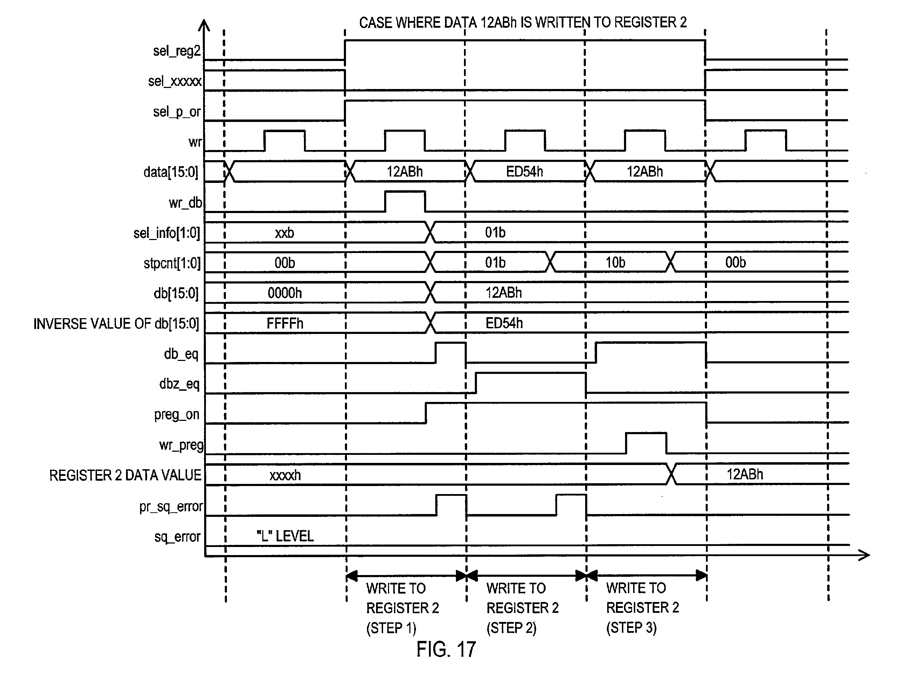

Referring now to FIG. 17, a timing diagram of a write to a protected register using sequence **600** according to an embodiment is set forth. The timing diagram of FIG. 17 illustrates a write of data **DATA[15:0]** = 12ABh (h indicates that 12AB is a hexadecimal number) into register **2** following sequence **600** shown in FIG. 6.

The timing diagram illustrated in FIG. 17 is similar to timing diagram of FIG. 7, however, it should be noted that protected select signal **sel_p_or** may become logic high in step 1 (**901**) to indicate a protected register is being addressed (in this case register **2**). Also, detection signal **preg_on** may be high in step 2 and step 3 (**902** and **903**) to indicate the same protected register (register **2**) is being addressed as was addressed in step 1.

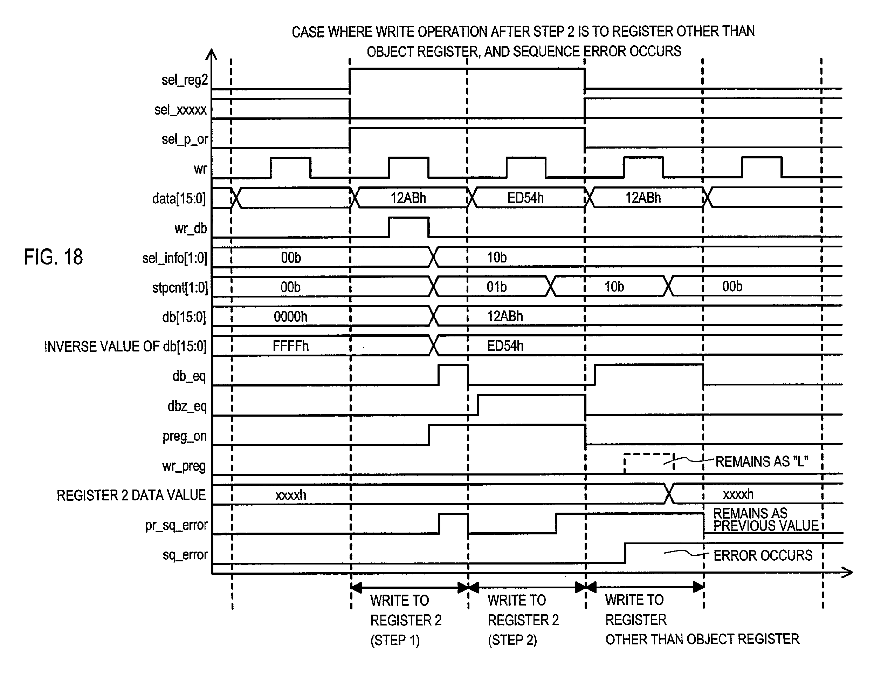

Referring now to FIG. 18, a timing diagram illustrating a case where an erroneous write operation to a register other than the object protected register **2** may occur after step 2 **902** according to an embodiment is set forth.

In FIG. 18, in step 1 **901**, a write is executed to register **2**. Thus, the protected register that is the object of the write sequence **600** is register **2**. However, in step **903**, a write is executed to another register (in this case, an unprotected register, such as registers (**4** to **n**). Thus, in step 3 **903**, protected select signal **sel_p_or** may return low (thus indicating a protected register is not selected). Also, in step 3 **903**, detection signal **preg_on** may be low (thus indicating a write is not to the same register (register **2**) as indicated by value **sel_info[1:0]** stored in object register detector **41**). In this way, write signal **wr_preg** may be suppressed and writing of data (12ABh) to register **2** may not be performed. Accordingly, error signal **sq_error** having a high logic level may be provided to notify, for example, CPU **6** that writing did not occur.

As described above (FIGS. 12 to 18), an example of a case where a plurality of registers may be write protected. In this way, the number of registers which may be write protected can be altered in response to the needs of the system.

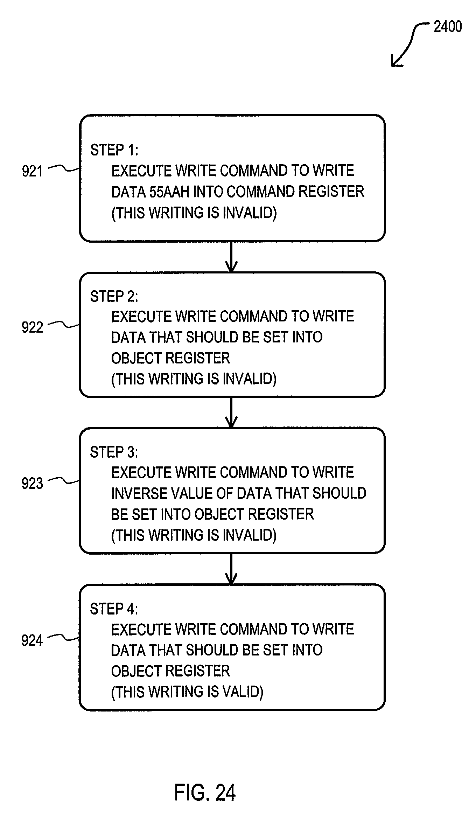

The write sequence to be executed to allow a write to a protected register should not be limited to three steps as in write sequence **600** (FIG. 6). An explanation will now be made for a write sequence including 4 steps as illustrated in FIG. 24.

Referring now to FIG. 24, a flow chart illustrating a write sequence according to an embodiment is set forth and given the general reference character **2400**.

Write sequence **2400** may be similar to write sequence **600**. However, write sequence **2400** may include a step (step 1 **921**) that may be inserted in the flow before step 1 **901** of write sequence **600**. In write sequence **2400**, step 1 may include a write command to write data **data[15:0]** having a value of 55AAh into a command register. Steps 2 to 4 (**922** to **924**) of write sequence **2400** may be similar to steps 1 to 3 (**901** to **903**) of write sequence **600** of FIG. 6.

In the present embodiment, writing of data to a protected register may only be valid and allowed to occur when the four steps (Step 1 **921**, Step 2 **922**, Step 3 **923**, and Step 4 **924**) are followed.

Write operations of step 1 **921**, step 2 **922**, and step 3 **923** may be included as steps in write sequence **2400**. However, at the time of steps 1 to 3 (**921** to **923**) write signal **wr_preg** may not be provided and no write may occur. Writing may be valid at the time of step 4 **924** only when steps 1 to 4 (**921** to **924**) are sequentially executed. When the write is valid, write signal **wr_preg** may be generated at step 4 **924**.

In a case where write sequence **2400** is not followed, the write operation may become invalid. For example, if another write operation is performed between step 1 **921** and step 2 **922**, between step 2 **922** and step 3 **923**, or between step 3 **923** and step 4 **924** the writing may become invalid and a sequence error may be detected. When a write to a protected register is attempted again, write sequence **2400** may begin again at step 1 **921**.

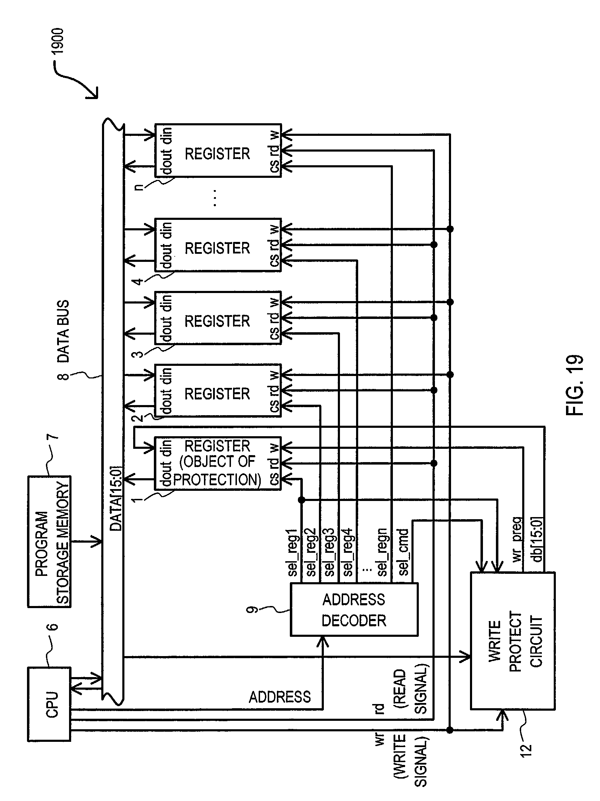

Referring now to FIG. 19, a block schematic diagram of a system including a write protect circuit is set forth according to an embodiment and given the general reference character **1900**. System **1900** may be similar to system **100** of FIG. 1, however, system **1900** may include an address decoder **9** that can generate a command register select signal **sel_cmd.** System **1900** may also include a write protect circuit **12** that may receive command register select signal **sel_cmd.**

Command register select signal **sel_cmd** may be generated as a part of write sequence **2400**. Step 1 **921** of write sequence **921** may include a write command writing data 55AAH to a command register. A command register may not be an actual register, but may merely be assigned an address. Command register select signal **sel_cmd** may be generated by address decoder **9** in response to the assigned address.

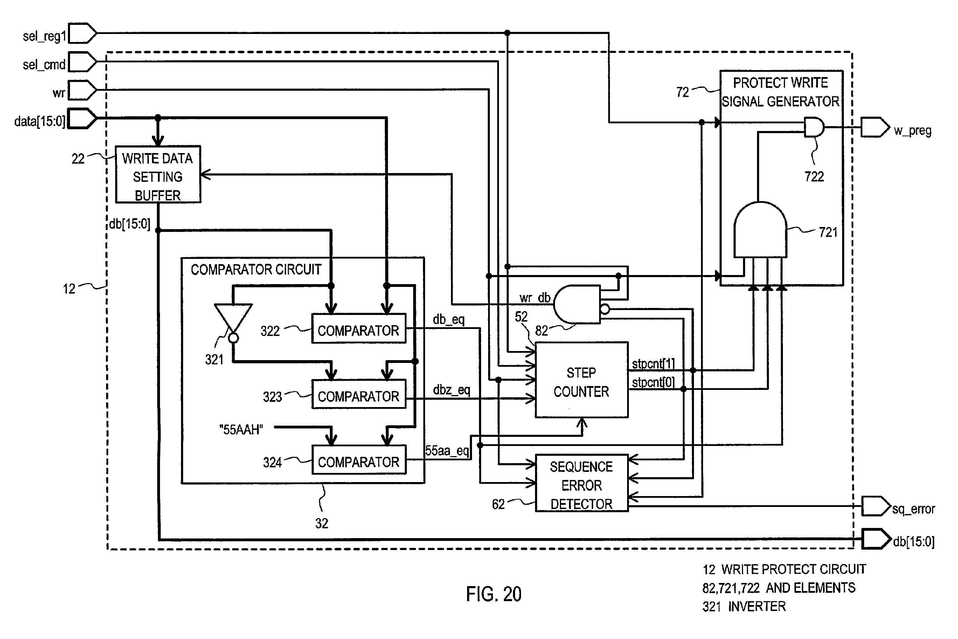

Referring now to FIG. 20, a circuit schematic diagram of write protect circuit **12** according to an embodiment is set forth.

Write protect circuit **12** may include a write data setting buffer **22**, a comparator circuit **32**, a step counter **52**, a sequence error detector **62**, a protect write signal generator **72**, and an AND gate **82.**

Write data setting buffer **22** may receive data **data[15:0]** and a signal **wr_db** and may provide data **db[15:0]**. Write data setting buffer **22** may latch a value of data **data[15:0]** received at step 1 **921** to provide data **db[15:0]**. The construction of write data setting buffer **22** may be similar to write data setting buffer **20** of FIG. 2, so detailed explanation thereof is omitted.

Comparator circuit **32** may receive data **data[15:0]** and data **db[15:0]** and may provide match signals (**db_eq** and **dbz_eq**). Comparator circuit **32** may perform data comparison. Comparator circuit **31** may include comparing units (**322**, **323**, and **324**) and an inverter **321**. The construction of comparator circuit **32** may differ from comparator circuit **30** of FIG. 2, in a comparing unit **324** may be included to compare a value of data **data[15:0]** from bus **8** with a value of 55AAh and output a match signal **55aa_eq.**

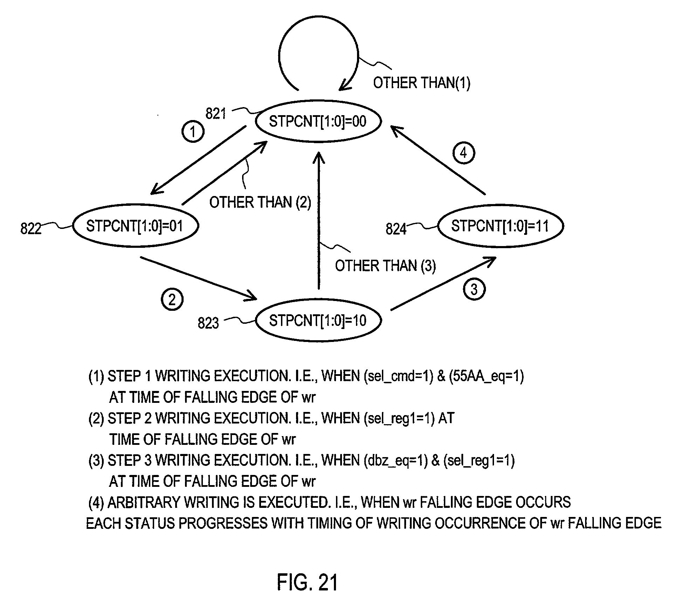

Referring now to FIG. 21, a state diagram illustrating a status progression of count signal **stpcnt[1:0]** according to an embodiment is set forth.

Step counter **52** may receive match signals (**dbz_eq** and **55aah**), write signal **wr**, command register select signal **sel_cmd** and select signal **sel_reg1** and provide count signal **stpcnt[1:0]** accordingly in response to an execution of a write command by CPU **6** (FIG. 19). More specifically, count signal **stpcnt[1:0]** may be set to a state (**821** to **824**) in response to a falling edge of write signal **wr** pulse provided by CPU **6**.

If count signal **stpcnt[1:0] =** 00b (state **821**) and step 1 **921** of a write operation is performed, count signal **stpcnt[1:0]** may progress to a value of 01b (state **822**). Then, if step 2 **922** of a write operation is performed, count signal s**tpcnt[1:0]** may progress to a value of 10b (state **82**3). Then, if step 3 **923** of a write operation is performed, count signal **stpcnt[1:0]** may progress to a value of 11b (state **824**). When a different write occurs, count signal **stpcnt[1:0]** may return to a value of 00b. When count signal **stpcnt[1:0]** has a value of 11b and a write (step 4 **924**) occurs, count signal **stpcnt[1:0]** may return to a value of 00b.

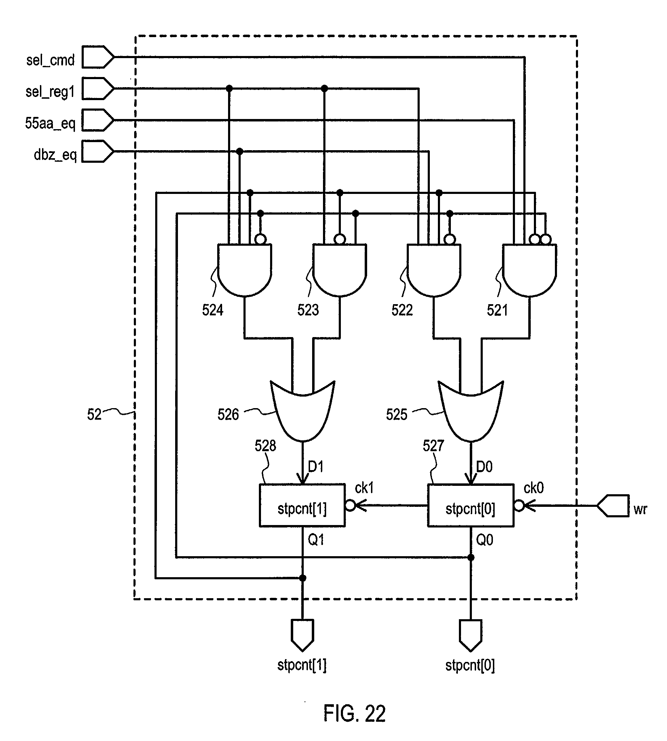

Referring now to FIG. 22, a circuit schematic diagram of step counter **52** according to an embodiment is set forth. Step counter **52** may provide count signal **stpcnt[1:0]** by following the state diagram illustrated in FIG. 21.

Step counter **52** may include AND gates (**521** to **524**), OR gates (**525** and **526**), and flip-flop circuits (**527** and **528**). Flip-flop circuits (**527** and **528**) may be D-type flip-flop circuits. AND gate **521** may receive command register select signal **sel_cmd**, match signal **55aa_eq**, inverted count bit **stpcnt[0]** and inverted count bit **stpcnt[1]** and may provide a logical product output as an input to OR gate **525.** AND gate **522** may receive select signal **sel_reg1**, inverted count bit **stpcnt[0]** and count bit **stpcnt[1]** and may provide a logical product output as an input to OR gate **525**. AND gate **523** may receive select signal **sel_reg1,** count bit **stpcnt[0]** and inverted count bit **stpcnt[1]** and may provide a logical product output as an input to OR gate **526**. AND gate **524** may receive select signal **sel_reg1,** match signal **dbz_eq,** inverted count bit **stpcnt[0]** and count bit **stpcnt[1]** and may provide a logical product output as an input to OR gate **526.** OR gate **525** may provide an output as an input **D0** to flip-flop circuit **527**. OR gate **526** may provide an output as an input **D1** to flip-flop circuit **528.**

Flip-flop circuit **527** may receive the output from OR gate **525** and write signal **wr**. Flip-flop circuit **527** may latch the output from OR gate **525** in response to an inverted write signal **wr** (i.e. at a falling edge of write signal **wr**) to provide count bit **stpcnt[0]** of count signal **stpcnt[1:0]**. Flip-flop circuit **528** may receive the output from OR gate **526** and write signal **wr**. Flip-flop circuit **528** may latch the output from OR gate **526** in response to an inverted write signal **wr** (i.e. at a falling edge of write signal **wr**) to provide count bit **stpcnt[1]** of count signal **stpcnt[1:0].**

Referring once again to FIG. 20, sequence error detector **62** may receive match signal **db_eq,** write signal wr, count signal **stpcnt[1:0],** and select signal **sel_reg1** and may provide an error signal **sq_error.** Sequence error detector **62** may detect whether write sequence **2400** has been performed normally (followed) or not. When write sequence **600** is not followed, sequence error detector **62** may provide error signal **sq_error** having an error logic state. Error signal **sq_error** may be provided to CPU **6** (FIG. 19) as a flag, an interrupt request or the like even though this connection is not illustrated in FIG. 19. Error signal **sq_error** may indicate that a different write operation was performed between step 1 **921** and step 2 **922**, between step 2 **922** and step 3 **923**, or between step 3 **923** and step 4 **924** in sequence **2400** (FIG. 24).

Sequence detector **62** may detect an error in 6 cases.

Examples of the six cases will be given when sequence detector **62** may generate an error signal **sq_error** indicating an invalid write (first write). A first case is when a first write operation to a protected register **1** occurs without previously writing 55AAh to the command register. In a second case, a first write operation to a register other than protected register **1** may occur after step 1 **921**. In a third case, a first write operation to a register other than protected register **1** may occur after step 2 **922**. In a fourth case, a first write operation may occur after step 2 **922** with a value other than inverted data (as compared to data **data[15:0]** in step 2 **922**). In a fifth case, a first write operation to a register other than protected register **1** may occur after step 3 **923**. In a sixth case, a first write operation may occur after step 3 **923** with a value other than data (data **data[15:0]** in step 2 **922**). When any of the six above-mentioned cases occur, write sequence **2400** has been interrupted or violated. In response to the violation of write sequence **2400**, writing to register **1** (a register protected by write protect circuit **12**) may be invalidated and thus, not take place and error signal **sq_error** may be output having an error logic state.

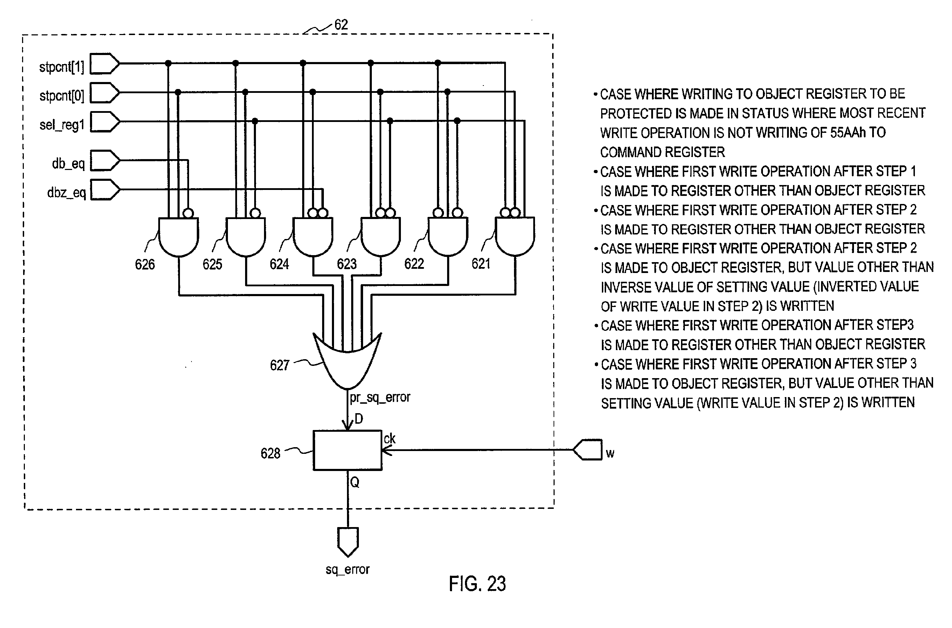

Referring now to FIG. 23, a circuit schematic diagram of sequence error detector **62** according to an embodiment is set forth.

Sequence error detector **62** may include AND gates (**621** to **626**), OR gate **627**, and flip-flop circuit **628**.

AND gate **621** may receive an select signal **sel_reg1**, inverted step count bit **stpcnt[1]**, and inverted step count bit **stpcnt[0]** and may provide an output as an input to OR gate **627**. AND gate **622** may receive an inverted select signal **sel_reg1**, inverted step count bit **stpcnt[1],** and step count bit **stpcnt[0]** and may provide an output as an input to OR gate **627**. AND gate **623** may receive an inverted select signal **sel_reg1**, inverted step count bit **stpcnt[0]**, and step count bit **stpcnt[1]** and may provide an output as an input to OR gate **627**. AND gate **624** may receive step count bit **stpcnt[1]**, inverted step count bit **stpcnt[0]**, and inverted match signal **dbz_eq** and may provide an output as an input to OR gate **627**. AND gate **625** may receive an inverted select signal **sel_reg1**, step count bit **stpcnt[1],** and step count bit **stpcnt[0]** and may provide an output as an input to OR gate **627**. AND gate **626** may receive an inverted match signal **db_eq**, step count bit **stpcnt[1]**, and step count bit **stpcnt[0]** and may provide an output as an input to OR gate **627**.

OR gate **627** may provide an output signal **pr_sq_error** as an input to flip-flop **628**.

Flip-flop **628** may be a D flip-flop. Flip-flop **628** may receive write signal **wr** at a clock **ck** input and may output error signal **sq_error**. Flip-flop **628** may latch the received signal **pr_sq_error** to provide error signal **sq_error** in response to a falling edge of write signal **wr**.

The above-mentioned first case may be detected by AND gate **621**. The second case may be detected with AND gate **622**. The third case may be detected with AND gate **623**. The fourth case may be detected with AND gate **624**. The fifth case may be detected with AND gate **625**. The sixth case may be detected with AND gate **626**. Output signals from AND gates (**621** to **626**) may be respectively provided as inputs to OR gate **627** to generate output signal **pr_sq_error** which may be latched by flip-flop **628** in response to a rising edge of write signal wr and output as error signal **sq_error.**

The operation of the system **1900** including write protect circuit **12** will now be explained.

First, an operation where a write to a protected register using sequence **2400** will be explained. Note the present embodiment may include a 4-step write sequence **2400**, but the basic operation may be similar to that of each of the above-mentioned embodiments.

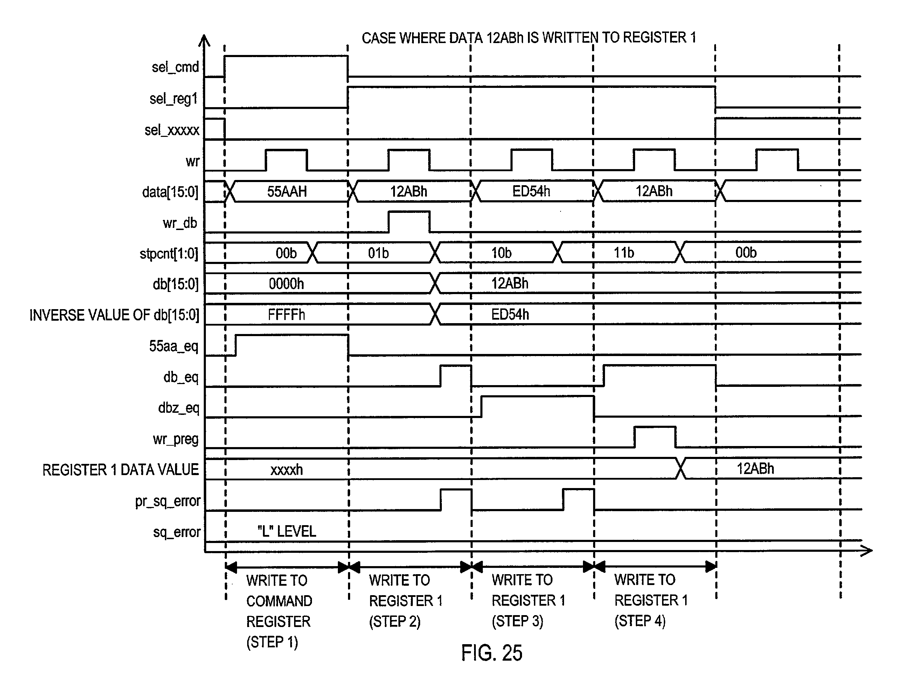

Referring to FIG. 25, a timing diagram of a write to a protected register using sequence **2400** according to an embodiment is set forth. The timing diagram of FIG. 25 illustrates a write of data **DATA[15:0]** = 12ABh (h indicates that 12AB is a hexidecimal number) into register **1** following sequence **2400** shown in FIG. 24.

Referring now to FIG. 25 in conjunction with FIGS. 19 to 24, first at step 1 **921**, a write command may be executed to a register (register address applied to address decoder **9**). Thus, data **data[15:0]** having a value of 55AAh may be applied to address bus **8** and command register select signal **sel_cmd** may be a high logic level. Also, comparator circuit **324** may provide a match signal **55aa_eq** having a high logic level. Also, at this time, AND gate **521** in step counter **52** may be enabled (in response to count signal **stpcnt[1:0]** = 00b and select signal **sel_reg1** and command register select signal **cmd_sel** being high) and may provide a high output as an input to OR gate **525**. Thus, OR gate **525** may provide a high output to flip-flop **527**. As a result, flip-flop **527** may latch a high level count bit **stpcnt[0]** in response to a falling edge of write signal **wr**. In this way, count signal **stpcnt[1:0]** may advance to a value of 01b.

Next, a write command may be executed to register **1** as step 2 **922**. In step 1 **922**, select signal **sel_reg1** may become active (high) while other select signals (**sel_reg2** to **sel_regn**) may be low (illustrated as signal **sel_xxxxx** in FIG. 25). Also, in step 2 **922**, CPU **6** may apply a value of 12ABh as data **data[15:0]** to data bus **8** and may provide write signal wr having a pulse. Because at this time step counter **60** outputs a count signal **stpcnt[1:0] =** 01b, AND gate **82** may output a signal **wr_db** as a pulse (following write signal **wr**). In response to signal **wr_db**, write data setting buffer **22** may latch received data **data[15:0]** and provide data **db[15:0]** having a value of 12ABh to comparator circuit **322**. Inverter **321** may provide inverted data having a value of ED54h to comparator circuit **323**. In this case, comparator circuit **322** may detect a match between data **data[15:0]** and data **db[15:0]** and may output a match signal **db_eq** having a high logic level. However, comparator circuit **323** may not detect a match between data **data[15:0]** and inverted data **db[15:0]** and may output a match signal **dbz_eq** having a low logic level.

Also, at this time, AND gates (**521** and **522**) in step counter **52** may be disabled (in response to count signal bit **stpcnt[10]** = 01b) and may provide a low outputs as an inputs to OR gate **525**. Thus, OR gate **525** may provide a low output to flip-flop **527**. As a result, flip-flop **527** may latch a low level count bit **stpcnt[0]** in response to a falling edge of write signal **wr**. Also, at this time, AND gate **523** in step counter **52** may be enabled (in response to count signal **stpcnt[1:0]** = 01b and select signal **sel_reg1** being high) and may provide a high output as an input to OR gate **526**. Thus, OR gate **526** may provide a high output to flip-flop **528**. As a result, flip-flop **528** may latch a high level count bit **stpcnt[1]** in response to a falling edge of write signal **wr**. In this way, count signal **stpcnt[1:0]** may advance to a value of 10b.

Next, another write command may be executed as step 3 **923.** In step 3 **923**, select signal **sel_reg1** may remain high while other select signals (**sel_reg2** to **sel_regn**) may be low (illustrated as signal **sel_xxxxx** in FIG. 25). Also, in step 3 **923**, CPU **6** may apply a value of ED54h as data **data[15:0]** to data bus **8** and may provide write signal **wr** having a pulse. In this case, comparator circuit **323** may detect a match between data **data[15:0]** and inverted data **db[15:0]** and may output a match signal **dbz_eq** having a high logic level. However, comparator circuit **322** may not detect a match between data **data[15:0]** and data **db[15:0]** and may output a match signal **db_eq** having a low logic level.

Also, at this time, AND gates (**524** and **522**) in step counter **52** may be enabled (in response to count signal bit **stpcnt[1:0]** = 10b, select signal **sel_reg1** being high, and match signal **dbz_eq** being high) and may respectively provide a high output as an input to OR gates (**525** and **526**). OR gates (**525** and **526**) may each provide a high output as an input to a respective flip-flop circuit (**527** and **528**). As a result, flip-flop circuit **528** may latch a high level count bit **stpcnt[1]** and flip-flop **527** may latch a high level count bit **stpcnt[0]** in response to a falling edge of write signal **wr**. In this way, count signal **stpcnt[1:0]** may advance to a value of 11b.

Next, another write command may be executed as step 4 **924**. In step 4 **924**, select signal **sel_reg1** may remain high while other select signals (**sel_reg2** to **sel_regn**) may be low (illustrated as signal **sel_xxxxx** in FIG. 25). Also, in step 4 **924,** CPU **6** may apply a value of 12ABh as data **data[15:0]** to data bus **8** and may provide write signal **wr** having a pulse. In this case, comparator circuit **322** may detect a match between data **data[15:0]** and **db[15:0]** and may output a match signal **db_eq** having a high logic level. However, comparator circuit **323** may not detect a match between data **data[15:0]** and inverted data **db[15:0]** and may output a match signal **dbz_eq** having a low logic level.

At this time, AND gate **721** in protect write signal generator **72** may provide a high output (because count signal **stpcnt[1:0]** = 11b, write signal **wr** is high, and match signal **db_eq** is high). Thus, AND gate **722** may generate write signal **wr_preg.** Write signal **wr_preg** may be a pulse essentially following write signal **wr** during step 4 **924**.

In response to write signal **wr_preg** having a pulse and select signal **sel_reg1** being high, data **db[15:0]** (12ABh in the present example as latched by write data setting buffer **22**) may be written into register **1**.

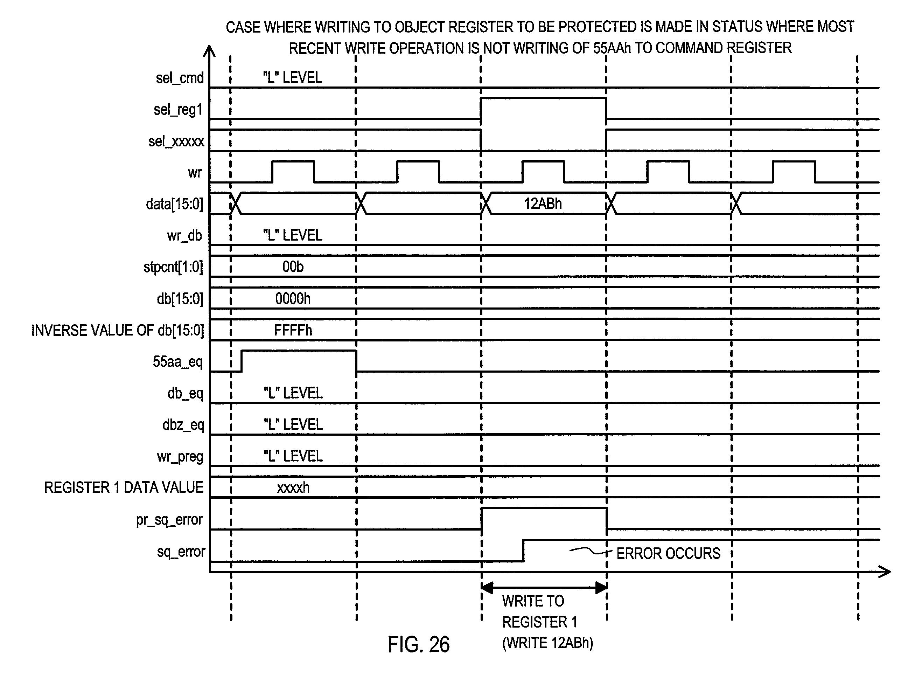

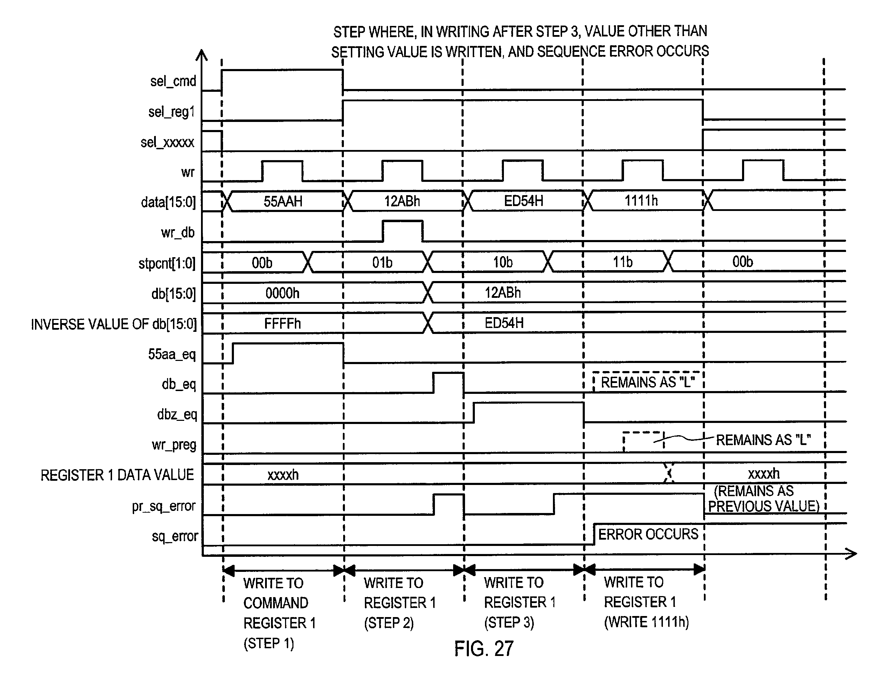

Now, using timing diagrams of FIGS. 26 and 27, an explanation will be made for cases where a write sequence is initiated to register **1**, however, write sequence **2400** is not followed and the write becomes invalid.

Referring now to FIG. 26, a timing diagram illustrating a case where an erroneous write operation to protected register **1** may occur without a preceding write operation writing 55AAh to a command register according to an embodiment is set forth.

The timing diagram of FIG. 26 may illustrate the above-mentioned first case of an erroneous write.

Referring now to FIG. 26 in conjunction with FIGS. 19 to 24, select signal **sel_reg1** may go high to select register **1**. However, because count signal **stpcnt[1:0]** = 00b at this time, AND gate **621** in sequence error detector **62** may provide a high logic level as an input to OR gate **627**. Thus, OR gate **627** may provide a signal **pr_sp_error** having a high logic level. Flip-flop **628** may then provide an error signal **sq_error** having a high logic level upon a rising edge of write signal **wr**.

Referring now to FIG. 27, a timing diagram illustrating a case where an erroneous write operation may occur after step 3 **923** with a value other than data (as compared to data **data[15:0]** in step 2 **922**) according to an embodiment is set forth.

The timing diagram of FIG. 27 may illustrate the above-mentioned first case of an erroneous write.

Referring now to FIG. 27 in conjunction with FIGS. 19 to 24, steps 1 to 3 (**921** to **923**) may be performed in accordance with sequence **2400** in essentially the same manner as steps 1 to 3 (**921** to **923**) in the timing diagram of FIG. 25. Next a write (after step 3 **923**) is made to register **1** with data **data[15:0]** having a value other than data **data[15:0]** in step 2 **922**. For example, data **data[15:0]** may have a value of 1111h while data **db[15:0]** (from step 2) may have a value of 12ABh. Thus, match signal **db_eq** may remain at a low logic level. AND gate **626** in sequence error detector **62** may receive the low match signal **db_eq** and count signal **stpcnt[1:0]** = 11b and may provide a high output. In this way, OR gate **627** may provide an output signal **pr_sq_error** having a high logic level. Flip-flop **627** may then provide an error signal **sq_error** having a high logic level upon a rising edge of write signal **wr**. Furthermore, with match signal **db_eq** having a low logic level, AND gate **721** in protect write signal generator **72** may provide an output having a logic low. In this way, AND gate **722** may provide a write signal **wr_preg** having a logic low level and a write to register **1** may be prevented.

As described above, in accordance with this embodiment, the number of steps in write sequence **2400** may be increased to four steps. Also, a specific value may be written into a specific address (command register) to indicate write sequence **2400** may be performed. In this way, repeated erroneous writing of a random value to the same register due to runaway by a CPU **6** or the like, may be prevented. Runaway by a CPU **6** may occur, for example, when CPU **6** is stuck in a loop.

Further, in accordance with the embodiments, it may not be necessary to include an extra (parity) bit of data to ensure data on data bus **8** has not been corrupted. Thus, error correction circuitry may not be necessary. In this way, the method of write protection according to the embodiments may be implemented with a relatively small amount of circuitry.

Further, the method of write protection according to the embodiments may be implemented by using circuitry for temporarily storing the write data while software may perform the detection (data comparison, or the like) to determine whether the write data is valid. However, it should be noted, that detection by software may increase the program code and may increase the time required to write to a register. In comparison, the above embodiments may have the effect that it may be sufficient to execute a write command three times to ensure a desired write to a protected register has occurred. In this way, the program code may be reduced and the time required to write to a register may be reduced.

As described above, in accordance with a write protection method of the embodiments, a determination may be made whether or not a write operation to a protected register has been performed in accordance with a specific write sequence. A control may be performed so that the writing of data to a protected register may only occur when a specific write sequence has been executed. In this way, undesired writes to a protected register may be prevented.

It is understood that the embodiments described above are exemplary and the present invention should not be limited to those embodiments. Specific structures should not be limited to the described embodiments.

Thus, while the various particular embodiments set forth herein have been described in detail, the present invention could be subject to various changes, substitutions, and alterations without departing from the spirit and scope of the invention. Accordingly, the present invention is intended to be limited only as defined by the appended claims.

## Claims

1. A write protect method for preventing an erroneous write to a predetermined register, comprising the steps of:
determining whether or not a write operation for writing data to the predetermined register was performed according to a predetermined write sequence including at least a first and second write command; and
controlling the writing of the data to the predetermined register so that the writing of data is only performed when it is determined in the determining step that the write operation for writing data to the predetermined register was performed according to the predetermined write sequence.

2. The write protect method according to claim 1, wherein:
the step of determining includes verifying the data by performing a data comparison.

3. The write protect method according to claim 1, wherein:
the first write command includes providing the data on a data bus and providing a first address corresponding to the predetermined register; and
the second write command includes providing inverse data on the data bus and providing the first address corresponding to the predetermined register.

4. The write protect method according to claim 3, wherein:
the predetermined write sequence further includes a third write command;
the third write command includes providing the data on the data bus and providing the first address corresponding to the predetermined register; and
the predetermined write sequence is executed in the order of first write command, second write command, and third write command.

5. The write protect method according to claim 3, wherein:
the predetermined write sequence further includes a third write command;
the third write command includes providing a predetermined value to the data bus and a second address;
the predetermined write sequence is executed in the order of third write command, first write command, and second write command.

6. The write protect method according to claim 1, further including the step of:
providing an error signal to a processing unit when it is determined that the write operation for writing data to the predetermined register was not performed according to the predetermined write sequence.

7. The write protect method according to claim 1, wherein:
the step of determining whether or not a write operation has been performed is executed by a computing device in accordance with a write protect program.

8. A write protect system for preventing an erroneous write to a first register, comprising:
a write protect circuit that determines whether or not a write operation for writing data to the first register was performed according to a predetermined write sequence including at least a first and second command and controlling the writing of the data to the first register so that the writing of data is only performed when it is determined that the write operation for writing data to the first register was performed according to the predetermined write sequence.

9. The write protect system according to claim 8, wherein:
the write protect circuit is coupled to receive the data from a data bus coupled to a processor.

10. The write protect system according to claim 8, wherein:
the write protect circuit is coupled to receive the data in the first command and coupled to receive different data in the second command.

11. The write protect system according to claim 10, wherein:
the predetermined write sequence includes a third command; and
the write protect circuit is coupled to receive the data in the third command and the predetermined write sequence is executed in the order of first command, second command, and third command.

12. The write protect system according to claim 10, wherein:
the write protect circuit is coupled to receive at least one register select signal having a first register select value in the first and second commands;
the predetermined write sequence includes a third command; and
the write protect circuit is coupled to receive a predetermined data value in the third command and the at least one register select signal having a command register select value.

13. The write protect system according to claim 8, wherein:
the write protect circuit resets to detect the first command in the predetermined sequence when it is determined that the predetermined sequence has not been followed.

14. The write protect system according to claim 8, wherein:
the write protect circuit is coupled to receive the data in the first command and coupled to receive inverse data in the second command.

15. A write protect system for preventing an erroneous write to a first storage circuit, comprising:
a write protect circuit that determines whether or not a write operation for writing data to the first storage circuit was performed according to a predetermined write sequence including at least a first and second command and controlling the writing of the data to the first storage circuit so that the writing of data is only performed when it is determined that the write operation for writing data to the first storage circuit was performed according to the predetermined write sequence.

16. The write protect system according to claim 15, wherein:
the write protect circuit includes a data latch circuit coupled to receive the data and provide latched data in response to the first command.

17. The write protect system according to claim 16, wherein:
the write protect circuit includes a comparator circuit coupled to receive the latched data and second command data and provide a comparison result.

18. The write protect system according to claim 17, wherein:
the comparison result includes a match signal indicating a comparison between the latched data and the second command data.

19. The write protect system according to claim 15, wherein:
the write protect circuit includes a state circuit providing a write sequence state indicating a progression of the write sequence.

20. The write protect system according to claim 19, wherein:
the write protect circuit includes a sequence error detector coupled to receive the write sequence state and provide a sequence error signal.
